(19) Europäisches Patentamt
European Patent Office
Office européen des brevets

(11) **EP 3 433 574 B1**

(12) **EUROPÄISCHE PATENTSCHRIFT**

(45) Veröffentlichungstag und Bekanntmachung des Hinweises auf die Patenterteilung:
**26.06.2024  Patentblatt 2024/26**

(21) Anmeldenummer: **17712986.3**

(22) Anmeldetag: **22.03.2017**

(51) Internationale Patentklassifikation (IPC):
***G01B 11/25*** *(2006.01)*

(52) Gemeinsame Patentklassifikation (CPC):
**G01B 11/2518**

(86) Internationale Anmeldenummer:
**PCT/EP2017/056885**

(87) Internationale Veröffentlichungsnummer:
**WO 2017/162778 (28.09.2017 Gazette 2017/39)**

(54) **VORRICHTUNG ZUR 3-DIMENSIONALEN VERMESSUNG EINES OBJEKTS, VERFAHREN UND COMPUTERPROGRAMM MIT BILDBASIERTER AUSLÖSUNG**

DEVICE FOR THREE-DIMENSIONALLY MEASURING AN OBJECT, METHOD AND COMPUTER PROGRAM HAVING IMAGE-BASED TRIGGERING

DISPOSITIF POUR MESURER UN OBJET EN 3 DIMENSIONS, PROCÉDÉ ET PROGRAMME INFORMATIQUE ASSOCIÉS À DÉCLENCHEMENT BASÉ SUR UNE IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2016  EP 16161794**

(43) Veröffentlichungstag der Anmeldung:
**30.01.2019  Patentblatt 2019/05**

(73) Patentinhaber: **Fraunhofer-Gesellschaft zur Förderung
der angewandten Forschung e.V.
80686 München (DE)**

(72) Erfinder:
• **DÖGE, Jens
01069 Dresden (DE)**
• **HOPPE, Christoph
01127Dresden (DE)**
• **NEUDECK, Willi
01189 Dresden (DE)**

(74) Vertreter: **Burger, Markus et al
Schoppe, Zimmermann, Stöckeler
Zinkler, Schenk & Partner mbB
Patentanwälte
Radlkoferstraße 2
81373 München (DE)**

(56) Entgegenhaltungen:
**EP-A1- 3 163 252        EP-A2- 0 228 500
US-A1- 2008 204 763    US-A1- 2014 285 658**

## Beschreibung

### Technisches Gebiet

Ausführungsbeispiele gemäß der vorliegenden Erfindung beziehen sich auf eine Vorrichtung zur 3-dimensionalen Vermessung eines Objekts.

Weitere Ausführungsbeispiele gemäß der vorliegenden Erfindung beziehen sich auf ein Verfahren zur 3-dimensionalen Vermessung eines Objekts.

Weitere Ausführungsbeispiele gemäß der Erfindung beziehen sich auf ein Computerprogramm zur Durchführung eines Verfahrens zur 3-dimensionalen Vermessung eines Objekts.

Weitere Ausführungsbeispiele beziehen sich auf ein Verfahren und eine Vorrichtung zur automatischen Lagebestimmung bei einer 3-dimensionalen (3D)-Vermessung mittels Laserlichtschnitt-Triangulation.

### Hintergrund der Erfindung

Aktuell gibt es in vielen technischen Gebieten den Wunsch, ein 3-dimensionales Abbild eines real existierenden Objekts zu erhalten. Beispielsweise ist es manchmal erwünscht, ein digitales Modell eines Objekts zu erstellen, um eine Animation zu erzeugen. Alternativ dazu ist es manchmal auch wünschenswert, ein Objekt zu kopieren, beispielsweise unter Verwendung eines 3-dimensionalen Drucks.

Es hat sich gezeigt, dass ein 3-dimensionales Abbild eines Objekts beispielsweise durch eine Laserlichtschnitt-Abtastung (auch als Laserlichtschnitt-Scan bezeichnet) erhalten werden kann.

So existiert beispielsweise ein Aufbau eines 3-dimensionalen Messsystems mit Laser-lichtschnitt-Triangulation. Bei herkömmlichen Konzepten erfolgt ein Vortrieb wahlweise für das Messobjekt oder für den Sensorkopf. Der Sensorkopf besteht beispielsweise aus einem oder mehreren Laserliniengeneratoren, und einer oder mehreren Messkameras, die beispielsweise in einem definierten geometrischen Verhältnis zueinander angeordnet sind. Bevorzugt sind auch der Sensorkopf aus Laserliniengenerator(en) und Messkamera(s) in einem definierten geometrischen Verhältnis zu einem Messobjekt (das sich beispielsweise während einer Messung in einer vorher definierten Weise verändert) angeordnet. Beispielsweise erfolgt ein kontinuierlicher oder ausgelöster (getriggerter) Betrieb einer Profilmessung durch einen Sensorkopf aus Laserliniengenerator und Messkamera.

Im herkömmlichen System gibt es auch eine feste Zuordnung zwischen Messobjekt und Laserlinie. Dieser ergibt sich beispielsweise durch einen geometrischen Aufbau bzw. durch einen Zusammenhang zwischen Vortriebseinheit des Scanners, Laserliniengenerator(en) und Messkamera(s). Typischerweise gibt es auch eine (beispielsweise vorbestimmte) Bewegungsrichtung.

Im herkömmlichen System gibt es verschiedene Möglichkeiten der Auslösung bzw. "Triggerung". Beispielsweise kann ein Inkrementalgeber für eine Triggerung der Messkamera(s) verwendet werden. Somit erfolgt beispielsweise eine Aufnahme von Messwerten, wenn eine externe Triggerung vorliegt. Die Triggerung kann beispielsweise durch einen gesteuerten oder detektierten Vortrieb an einem Bewegungssystem des Messaufbaus erfolgen.

Typischerweise gibt es eine (beispielsweise vorher festgelegte) Bewegungsrichtung.

Alternativ (oder zusätzlich) zu einer Triggerung durch einen Inkrementalgeber kann beispielsweise eine konstante Scangeschwindigkeit verwendet werden. In diesem Fall kann beispielsweise eine zeitgesteuerte Triggerung zum Einsatz kommen. Alternativ kann in diesem Fall auch ein freilaufender Scanner verwendet werden.

Die US 2014/0285658 A1 beschreibt eine kontaktlose Messvorrichtung. Die Messvorrichtung umfasst ein oder mehrere Bildgebungsvorrichtungen, die Bilddaten einer Oberfläche eines Objekts aufnehmen. Die Vorrichtung umfasst einen oder mehrere Projektions-Mustergeneratoren, die divergente Muster auf einer Oberfläche des Objekts innerhalb eines Sichtfelds der Bildgebungsvorrichtung erzeugen. Unter Verwendung von Bilddaten, die durch die Bildgebungsvorrichtung(en) aufgenommen werden, bestimmt ein Computersystem einen Satz von Attributen der Oberfläche des Objekts und/oder bestimmt automatisch, ob das Messobjekt innerhalb einer Messregion ist.

Die EP 0 228 500 A2 beschreibt ein Verfahren und eine zugehörige Einrichtung zur berührungslosen Vermessung des Radprofils der Räder von Eisenbahnradsätzen, bei denen das Profil mindestens teilweise beleuchtet wird. Es wird vorgeschlagen, dass jedes Rad entlang einer Messstrecke bewegt und mindestens in einer vordefinierten Messposition mindestens angenähert radial von mindestens einer Beleuchtungseinrichtung, die einen Lichtschnitt oder eine Lichtkante auf der Umfangsfläche des Rads erzeugt, während der Bewegung entlang der Messstrecke beleuchtet wird, wobei sich das durch die Beleuchtung ergebende Profilbild von mindestens einer Kamera erfasst und einer Auswerteeinrichtung zur Auswertung zugeleitet wird. Zur Durchführung wird hierzu vorgeschlagen, dass in einer Messstrecke für jedes Rad eines Radsatzes eine Hilfsschiene, angeschlossen oder anschließbar an ein Gleis, vorgesehen ist, dass die Beleuchtungseinrichtung optische Mittel zur Erzeugung eines Lichtschnitts oder einer Lichtkante an der Umfangsfläche des Rads aufweist und unterhalb einer Bewegungsebene der zugeordneten Hilfsschiene angeordnet ist, dass der Beleuchtungseinrichtung mindestens eine Kamera zur Erfassung des Profils des Lichtschnitts oder der Lichtkante zugeordnet ist, wobei die Kamera mit einer Auswerteeinrichtung und diese mit einer Ausgabeeinheit verbunden ist, und wobei die Einrichtung Mittel zur Erfassung mindestens der Messposition aufweist, die die Aktivierung der Einrichtung auslösen.

Die US 2008/0204763 A1 beschreibt einen Messapparat und ein Verfahren zur Bereichsinspektion. Ein Abbildungsapparat und ein Verfahren zur Messung von dreidimensionalen Charakteristika eines Objekts verwenden eine Bereichsdaten-Akquisition und eine Analyse. Der Abbildungsapparat umfasst eine Vorrichtung zum Konfigurieren der Bereichsdaten-Akquisition und Analyse vor einem Start der Messung. Der Apparat umfasst ferner eine Vorrichtung zum Erzeugen eines Bilds des Objekts durch Detektion von reflektiertem Licht von dem Objekt unter Verwendung zumindest eines Sensors, der Pixel aufweist. Der Apparat umfasst ferner eine Vorrichtung zum Erhalten von Bereichsdaten des Objekts, die in Sensor-Pixel-Einheiten gemessen sind. Der Apparat umfasst ferner eine Vorrichtung zur Kalibrierung der erhaltenen Bereichsdaten von Sensor-Pixel-Werten zu Welt-Koordinaten. Der Apparat umfasst ferner eine Vorrichtung zur Korrektur der kalibrierten Bereichsdaten durch Neu-Abtastung der Bereichsdaten auf ein gleichmäßiges Gitter. Der Apparat umfasst ferner eine Vorrichtung zur Analyse der kalibrierten und korrigierten Bereichsdaten, um die dreidimensionalen Charakteristika des Objekts zu erhalten.

Die EP 3 163 252 A1 beschreibt eine Vorrichtung zur dreidimensionalen Formbestimmung, ein Messsystem zur dreidimensionalen Formbestimmung, sowie entsprechende Verfahren und Computerprogramme. Eine Vorrichtung zur dreidimensionalen Formbestimmung umfasst eine Markensucheinheit, die unter Verwendung einer Suchmarke eine Koordinate eines Teils einer Oberfläche eines Messobjekts, das eine optische Schnittlinie umfasst, berechnet.

Die US 2014/240464 A1 beschreibt eine Kontext-basierte Tiefensensorsteuerung. Eine elektronische Vorrichtung umfasst einen Tiefensensor, eine erste Bildgebungskamera und einen Controller. Der Tiefensensor umfasst einen modulierten Licht-Projektor, um ein moduliertes Lichtmuster zu projizieren. Die erste Bildgebungskamera erfasst zumindest eine Reflexion des modulierten Lichtmusters. Der Controller modifiziert selektiv zumindest die Frequenz oder die Intensität oder die Dauer von Projektionen des modulierten Lichtmusters ansprechend auf zumindest ein Trigger-Ereignis. Das Trigger-Ereignis kann z. B. eine Veränderung von Umgebungslicht, eine Detektion einer Bewegung der Vorrichtung oder eine Erkennung, dass die Vorrichtung sich in einer anderen Umgebung befindet, sein.

Herkömmlicherweise besteht das Ziel der aufgenommenen Profile-Speicherung darin, dass alle aufgenommenen Profile einer Verarbeitung zugeführt werden.

In Anbetracht dessen besteht ein Wunsch, ein flexibleres Konzept zur 3-dimensionalen Vermessung eines Objekts zu schaffen.

Zusammenfassung der Erfindung

Ausführungsbeispiele gemäß der vorliegenden Erfindung schaffen eine Vorrichtung zur 3-dimensionalen Vermessung eines Objekts. Die Vorrichtung umfasst eine Auswerteeinrichtung zur Bestimmung von Vermessungsergebnissen und eine Auslöseeinrichtung (auch als Trigger-Einrichtung bezeichnet), die ausgelegt ist, um eine Bildinformation von einer Messkamera zu erhalten und um abhängig von einem Bildinhalt der Bildinformation eine Messausgabe (beispielsweise eine Weiterleitung der Bildinformation an eine Auswerteeinrichtung zur Bestimmung von Vermessungsergebnissen) oder eine (weitere, detailliertere) Auswertung der Bildinformation durch eine Auswerteeinrichtung zur Bestimmung von Vermessungsergebnissen auszulösen (zu triggern). Die Auslöseeinrichtung ist ausgelegt, um einen Vergleich von einem oder mehreren aktuellen Bildsensor-Analogsignalen mit einem oder mehreren in einem Analogspeicher gespeicherten Referenz-Bildsensor-Analogsignalen durchzuführen, um eine zeitliche Veränderung einer Bildinformation zu erkennen, wobei der analoge Vergleich einer Bildung von Differenzbildern entspricht und eine Erkennung einer Bewegung des Bildinhalts ermöglicht, um basierend darauf die Ausgabe einer digitalisierten Version der Bildinformation über eine digitale Schnittstelle des Bildsensors auszulösen. Die Auslöseeinrichtung ist ausgelegt, um verschiedene Merkmale in verschiedenen Bereichen des Bildinhalts zu analysieren, wobei bei einer Auswertung von Merkmalen in verschiedenen Bereichen des Bildinhalts sachlich unterschiedliche Bildinhalte gleichsam betrachtet werden, wobei die Auslöseeinrichtung ausgelegt ist, zu entscheiden, in welchen Bildinhalten relevante Merkmale vorliegen, um die Ausgabe einer digitalisierten Version der Bildinformation auszulösen

Dieses Ausführungsbeispiel gemäß der vorliegenden Erfindung basiert auf der Erkenntnis, dass eine Flexibilität bei einer 3-dimensionalen Vermessung wesentlich gesteigert werden kann, wenn eine Messausgabe oder eine Auswertung der Bildinformation durch die Auswerteeinrichtung zur Bestimmung von Vermessungsergebnissen nicht über mechanische Positionssensoren, sondern über eine Auswertung einer Bildinformation von einer Messkamera erfolgt. Somit kann beispielsweise die von der Messkamera bereitgestellte Bildinformation nicht nur für die Bestimmung von Vermessungsergebnissen durch die Auswerteeinrichtung, sondern auch für die Festlegung eines Zeitpunkts, wann (bzw. basierend auf welcher Bildinformation) ein Vermessungsergebnis bestimmt werden soll, herangezogen werden kann. Durch eine basierend auf dem Bildinhalt der Bildinformation ausgelöste Messausgabe (z.B. eine Weiterleitung der Bildinformation an die Auswerteeinrichtung zur Bestimmung von Vermessungsergebnissen) oder durch eine entsprechend ausgelöste Auswertung der Bildinformation durch die Auswerteeinrichtung, kann somit der bisher erforderliche mechanische Aufwand zur Positionsbestimmung oder zur Festlegung einer wohldefinierten Ausrichtung der Vorrichtung im Hinblick auf ein zu vermessendes Objekt entfallen, und eine 3-dimensionale Vermessung eines Objekts kann auch bei solchen Objekten oder in solchen Situationen erfolgen, in denen eine Festlegung einer wohldefinierten Ausrichtung der Vorrichtung im Hinblick auf das zu vermessende Objekt oder eine mechanische Bestimmung der Lage der Vorrichtung im Hinblick auf das zu vermessende Objekt nicht möglich ist. Im Übrigen ist festzuhalten, dass die Messkamera üblicherweise ohnehin eine sehr hochauflösende Bildinformation liefert, so dass die Auslösung der Messausgabe bzw. der Auswertung der Bildinformation im Wesentlichen mit der gleichen Genauigkeit erfolgen kann, mit der auch die Bildinformation an sich bereitgestellt wird. Somit werden Ungenauigkeiten, wie sie bei mechanischer Positionsbestimmung bzw. bei mechanischer Führung oftmals vorhanden sind, vermieden. Weiterhin ist festzuhalten, dass typischerweise ein Realisierungsaufwand bei der Auswertung einer Bildinformation, die auf elektronischem oder mikroelektronischem Wege erfolgen kann, geringer

ist als bei der Sicherstellung einer geeigneten Positionierung der Vorrichtung oder bei einer mechanisch präzisen Bestimmung der Position der Vorrichtung.

Somit ist insgesamt festzuhalten, dass die auf einem Bildinhalt der Bildinformation basierende Auslösung der Messausgabe oder der Auswertung der Bildinformation gegenüber bisherigen Konzepten, bei denen die Verarbeitung durch mechanische Geber ausgelöst wird, wesentliche Vorteile mit sich bringt.

Bei einem bevorzugten Ausführungsbeispiel erfolgt die Auslösung der Messausgabe ausschließlich basierend auf dem Bildinhalt. Entsprechend sind keine weiteren mechanischen oder sonstigen Positionssensoren erforderlich, um die Messausgabe oder die Auswertung der Bildinformation auszulösen.

Bei einem weiteren bevorzugten Ausführungsbeispiel ist die Auslöseeinrichtung ausgelegt, um eine Bildanalyse durchzuführen, und um die Messausgabe oder die Auswertung der Bildinformation abhängig von der Bildanalyse auszulösen. Insofern werden in der Bildinformation bevorzugt Merkmale identifiziert, die als Kriterien für eine Auslösung betrachtet werden. Beispielsweise können Schnittpunkte einer Laserlinie mit anderen Linien vorgegebener oder bekannter Lage identifiziert werden, und es kann basierend darauf eine Position bzw. Lage der projizierten Linie (Laserlinie) ermittelt werden. Alternativ dazu können auch andere Merkmale bei der Bildanalyse erkannt werden, wie beispielsweise eine Bewegung, oder bestimmte Oberflächeneigenschaften eines zu vermessenden Objekts oder eines Trägerbauteils, das das zu vermessende Objekt trägt. Insbesondere hat sich gezeigt, dass eine Auswertung durch eine Bildanalyse in vielen Fällen zu präziseren Ergebnissen führt und in manchen Fällen auch die Handhabung der Vorrichtung zur 3-dimensionalen Vermessung eines Objekts im Vergleich zu konventionellen Vorrichtungen wesentlich erleichtert.

Bei einem bevorzugten Ausführungsbeispiel ist die Auslöseeinrichtung ausgelegt, um eine analoge Vorverarbeitung von Bildsensor-Analogsignalen (beispielsweise ohne eine Quantisierung mit mehr als zwei Stufen) vorzunehmen, und um basierend auf der analogen Vorverarbeitung der Bildsensor-Analogsignale (bzw. basierend auf einem Ergebnis der analogen Vorverarbeitung und einer entsprechenden Entscheidung, ob eine Auslösebedingung erfüllt ist) die Weiterleitung der Bildinformation (beispielsweise einer digitalisierten Version der Bildinformation) über eine digitale Schnittstelle des Bildsensors oder die (weitere, detailliertere) Auswertung der Bildinformation durch eine Auswerteeinrichtung zur Bestimmung von Vermessungsergebnissen auszulösen. So hat sich gezeigt, dass eine bevorzugt sensornahe analoge Vorverarbeitung der Bildsensor-Analogsignale typischerweise sehr schnell und auch mit geringem Stromverbrauch realisierbar ist. Eine aufwendige Übertragung eines gesamten Bildinhalts kann beispielsweise durch eine bevorzugt sensornahe Vorverarbeitung von Bildsensor-Analogsignalen vermieden werden. Somit kann die Auslösung der Weiterleitung der Bildinformation oder der weiteren detaillierteren Auswertung der Bildinformation zur Bestimmung von Vermessungsergebnissen mit sehr kurzen Reaktionszeiten erfolgen. Außerdem kann eine ständige bitraten-aufwendige Ausgabe einer digitalisierten Bildinformation eingespart werden, wenn die Auslösung basierend auf einer analogen Vorverarbeitung von Bildsensor-Analogsignalen (und einer Entscheidung, ob eine Auslösebedingung vorliegt) erfolgt. Insgesamt kann somit eine sehr kurze Reaktionszeit bei der Auslösung erreicht werden, und es kann auf der anderen Seite eine dazu erforderliche (Bild-)Verarbeitungsleistung geringgehalten werden.

Bei einem weiteren bevorzugten Ausführungsbeispiel ist die Auslöseeinrichtung ausgelegt, um eine Digitalisierung von Bildsensor-Analogsignalen und eine Ausgabe einer digitalisierten Version der Bildinformation über eine digitale Schnittstelle des Bildsensors auszulösen. Durch die entsprechende Ausgestaltung wird beispielsweise vermieden, dass permanent bzw. kontinuierlich digitalisierte Bildinformationen ausgegeben werden, auch wenn diese beispielsweise gar nicht benötigt werden (weil kein Auslöse-Ereignis vorliegt). Somit wird Übertragungskapazität und auch Energie eingespart.

Bei einem bevorzugten Ausführungsbeispiel ist die Auslöseeinrichtung ausgelegt, um Bildsensor-Analogsignale mit einem Schwellwert zu vergleichen, und um basierend auf einem Ergebnis des Vergleichs die Ausgabe einer digitalisierten Version der Bildinformation über eine digitale Schnittstelle des Bildsensors auszulösen. Gemäß der Erfindung ist die Auslöseeinrichtung ausgelegt, um ein aktuelles Bildsensor-Analogsignal mit einem in einem Analogspeicher gespeicherten Bildsensor-Analogsignal zu vergleichen, um eine zeitliche Veränderung einer Bildinformation zu erkennen, und um basierend darauf eine Ausgabe einer digitalisierten Version der Bildinformation über eine digitale Schnittstelle des Bildsensors auszulösen. Alternativ oder zusätzlich ist die Auslöseeinrichtung ausgelegt, um eine kombinierende analoge Verarbeitung einer Mehrzahl von Bildsensor-Analogsignalen vorzunehmen, und um basierend auf einem Ergebnis der kombinierenden analogen Verarbeitung die Ausgabe einer digitalisierten Version der Bildinformation über eine digitale Schnittstelle des Bildsensors auszulösen. Diese Ausführungsbeispiele gemäß der Erfindung basieren auf der Erkenntnis, dass verschiedene analoge Verarbeitungsmöglichkeiten bestehen, um zu erkennen, ob eine Ausgabe einer digitalisierten Version der Bildinformation über die digitale Schnittstelle des Bildsensors ausgelöst werden soll oder nicht. Beispielsweise kann ein Vergleich eines oder mehrerer Bildsensor-Analogsignale mit einem Schwellwert erfolgen, wodurch beispielsweise erkannt wird, wenn ein bestimmter Helligkeitswert in dem Bild überschritten wird. Dies kann beispielsweise das Vorhandensein einer Laserlinie oder das Vorhandensein einer bestimmten Markierung in dem Bild signalisieren und somit zu einer Auslösung führen. Ein Vergleich von einem oder mehreren aktuellen Bildsensor-Analogsignalen mit einem oder mehreren in einem Analogspeicher gespeicherten Werten (Referenz-Bildsensor-Analogsignalen) kann beispielsweise eine Erkennung einer Bewegung des Bildinhalts ermöglichen. Wird beispielsweise durch einen derartigen analogen Vergleich, der einer Bildung von Differenzbildern enspricht, erkannt, dass eine ausreichende Bewegung (oder eine Bewegung einer vorbestimmten Größe) vorliegt, so kann entsprechend eine Ausgabe der digitalisierten Version der Bildinformation über die digitale Schnittstelle des Bildsensors ausgelöst werden. In anderen Worten, durch einen analogen Vergleich von Bildsensorsignalen mit in einem Analogspeicher gespeicherten Bildsensor-Analogsignalen (bzw. entsprechenden Signalwerten) kann eine Bewegung erkannt werden, und es kann basierend auf dieser analogen und damit schnellen Bewegungserkennung die Auslösung erfolgen.

Eine kombinierende analoge Verarbeitung einer Mehrzahl von Bildsensor-Analogsignalen kann beispielsweise eine gewichtete oder nicht-gewichtete Addition oder Subtraktion von Bildsensor-Analogsignalen von benachbarten Pixeln umfassen. So kann beispielsweise durch eine analoge Kombination einer Mehrzahl von Bildsensor-Analogsignalen eine räumliche und/oder zeitliche Filterung durchgeführt werden, die beispielsweise in Verbindung mit einem Schwellwertvergleich des kombinierten Signals (das durch eine kombinierende analoge Verarbeitung einer Mehrzahl von Bildsensor-Analogsignalen entsteht) eine Erkennung des Vorliegens einer bestimmten Struktur in der Bildinformation ermöglicht, wobei die Erkennung einer entsprechenden Struktur (z.B. eines besonders hellen Punktes einer bestimmten Ausdehnung, oder einer geraden Linie, oder einer sonstigen Markierung) zur Auslösung der Ausgabe der digitalisierten Version der Bildinformation führen kann. Somit ist festzuhalten, dass verschiedene Arten der analogen Verarbeitung von Bildsensor-Analogsignalen zu einer effizienten Auslösung der Ausgabe der digitalisierten Version der Bildinformation über die digitale Schnittstelle des Bildsensors führen können.

Bei einem bevorzugten Ausführungsbeispiel ist die Auslöseeinrichtung ausgelegt, um eine Bildinformation, die einen Laser-Lichtschnitt oder einen anderen Lichtschnitt zeigt, zu analysieren (beispielsweise durch eine analoge Verarbeitung der Bildsensor-Analogsignale) und um basierend auf der Analyse die Weiterleitung der Bildinformation oder die Auswertung der Bildinformation durch die Auswerteeinrichtung zur Bestimmung von Vermessungsergebnissen auszulösen. Es hat sich gezeigt, dass die Analyse einer Bildinformation, die einen Laser-Lichtschnitt oder einen anderen Lichtschnitt zeigt, in sehr effizienter und präziser Weise zur Auslösung verwendet werden kann, da beispielsweise entlang des Laser-Lichtschnitts wichtige, für die Auslösung relevante Merkmale liegen können.

Bei einem weiteren bevorzugten Ausführungsbeispiel ist die Auslöseeinrichtung ausgelegt, um unter Verwendung eines Laser-Lichtschnitts oder eines anderen Lichtschnitts 3-dimensionale Marken auf einer Oberfläche (beispielsweise auf einer Oberfläche einer Unterlage, auf der sich ein Messobjekt befindet) oder zweidimensionale optische Eigenschaften entlang einer Laserlinie (zum Beispiel einer durch einen Laser auf einer ebenen oder gebogenen Fläche geschriebenen Linie) als Merkmale zu erkennen (beispielsweise durch eine analoge Verarbeitung der Bildsensor-Ausgangssignale) und abhängig von erkannten Merkmalen die Weiterleitung der Bildinformation oder die Auswertung der Bildinformation durch die Auswerteeinrichtung zur Bestimmung von Vermessungsergebnissen auszulösen. So wurde erkannt, dass 3-dimensionale Marken auf der Oberfläche unter Verwendung eines Laser-Lichtschnitts oder eines anderen Lichtschnitts besonders gut und mit hoher Präzision ersichtlich sind. Insbesondere sind bei einer derartigen Betrachtung Schnittpunkte des Laser-Lichtschnitts (oder des anderen Lichtschnitts) mit den 3-dimensionalen Merkmalen auf der Oberfläche meist recht klar ersichtlich und daher gut für eine Triggerung auswertbar. Im Übrigen ist das Vorhandensein von 3-dimensionalen Marken, oder auch das Vorhandensein von (typischerweise räumlich veränderlichen) zweidimensionalen optischen Eigenschaften entlang der Laserlinie ein gutes Kriterium für eine Auslösung, da das Vorhandensein von 3-dimensionalen Marken auf der Oberfläche oder das Vorhandensein besonderer zweidimensionaler optischer Eigenschaften entlang eines Laser-Lichtschnitts (also entlang einer wohldefinierten Linie) typischerweise eine klare Information darüber bietet, ob eine Auslösung erfolgen soll oder nicht. So ist es in vielen Fällen wünschenswert, dass eine Auslösung erfolgt, wenn der Laser-Lichtschnitt eine bestimmte 3-dimensionale Marke auf der Oberfläche erreicht oder wenn der Laser-Lichtschnitt einen Bereich erreicht, in dem bestimmte zweidimensionale optische Eigenschaften entlang der Laserlinie detektierbar werden. Im Übrigen sei darauf hingewiesen, dass die Auslösung einer Bildinformation, die durch einen Laser-Lichtschnitt erzeugt wird, eine hohe Genauigkeit bietet, da auf diese Weise ja genau eine Oberflächeneigenschaft entlang des Laser-Lichtschnitts, der ja auch für die weitere Verarbeitung von Bedeutung ist, berücksichtigt wird. Somit können beispielsweise auch Toleranzen bei der Erzeugung des Laser-Lichtschnitts kompensiert werden, da die Auslösung beispielsweise genau dann erfolgt, wenn der Laser-Lichtschnitt auf einen Bereich mit bestimmten Marken oder bestimmten optischen Eigenschaften trifft.

Bei einem bevorzugten Ausführungsbeispiel ist die Auslöseeinrichtung ausgelegt, um eine Information über eine Zuverlässigkeit einer Linienerkennung oder eine Information über eine Breite einer Linie zu erhalten, und um abhängig davon die Weiterleitung der Bildinformation oder die Auswertung der Bildinformation durch die Auswerteeinrichtung zur Bestimmung von Vermessungsergebnissen auszulösen. So kann beispielsweise erreicht werden, dass eine Auslösung dann erfolgt, wenn eine durch den Laser-Lichtschnitt erzeugte Linie auch klar erkennbar ist, was beispielsweise durch Auswertung eines Zuverlässigkeitsmaßes einer Linienerkennung oder durch Detektion einer ausreichend geringen Breite einer Linie (z.B. in einer durch die Messkamera gelieferten Bildinformation) erkannt werden kann.

Gemäß der Erfindung ist die Auslöseeinrichtung ausgelegt, um zu erkennen, wenn der Bildinhalt (z.B. der von der Messkamera gelieferte Bildinhalt) sich gegenüber einem Referenz-Bildinhalt um zumindest eine vorgegebene Verschiebung (oder um mehr als eine vorgegebene Verschiebung) verschoben hat, und um abhängig von der Erkennung einer Verschiebung die Weiterleitung der Bildinformation oder die Auswertung der Bildinformation durch die Auswerteeinrichtung zur Bestimmung von Vermessungsergebnissen auszulösen. Eine solche Vorgehensweise kann günstig sein, wenn Vermessungsergebnisse beispielsweise in einem bestimmten räumlichen Abstand erzeugt werden sollen. Eine Verschiebung beispielsweise um einen Bildpunkt oder um eine bestimmte Anzahl von Bildpunkten ist im Übrigen durch eine analoge oder digitale Bildverarbeitung gut erkennbar. Insofern kann somit beispielsweise eine Bestimmung von Vermessungsergebnissen in gleichmäßigen räumlichen Abständen erzielt werden, ohne dass eine mechanische Erfassung einer Relativbewegung zwischen dem Laserliniengenerator und/oder der Messkamera und dem zu vermessenden Objekt erfolgen muss.

Bei einem bevorzugten Ausführungsbeispiel ist die Auslöseeinrichtung ausgelegt, um basierend auf dem Bildinhalt eine Bewegung einer Kamera, die die Bildinformation erzeugt, und/oder eine Verschiebung einer Lichtquelle (z.B. eines Laserliniengenerators), die das Messobjekt bestrahlt (z.B. relativ zu dem zu vermessenden Objekt), und/oder eine Bewegung des Messobjekts, zu bestimmen oder abzuschätzen. Insgesamt wird also beispielsweise bestimmt oder abgeschätzt, wie sehr sich Kamera und Beleuchtung relativ zum Messobjekt bewegen. In diesem Fall ist die Auslöseeinrichtung ausgelegt, um abhängig von der Bestimmung oder Abschätzung der Verschiebung die Weiterleitung der Bildinformation oder die Auswertung der Bildinformation durch die Auswerteeinrichtung zur Bestimmung von Vermessungsergebnissen auszulösen. Dieses Ausführungsbeispiel basiert auf der Erkenntnis, dass basierend auf einer Bildverarbeitung in verschiedener Weise eine Relativbewegung zwischen einer Lichtquelle, die das Messobjekt bestrahlt und/oder einer Messkamera und dem zu vermessenden Objekt ermittelt werden kann. Zur Erzeugung eines zuverlässigen Vermessungsergebnisses ist es daher in manchen Fällen sinnvoll, eine derartige Information über die Verschiebung auszuwerten und bei Vorliegen einer gewünschten Verschiebung (beispielsweise in Bezug auf eine vorherige Bestimmung eines Vermessungsergebnisses) eine erneute Bestimmung eines Vermessungsergebnisses auszulösen. Dadurch kann eine Bestimmung von Vermessungsergebnissen mit einem bestimmten räumlichen Abstand erzielt werden.

Bei einem bevorzugten Ausführungsbeispiel ist die Auslöseeinrichtung ausgelegt, um bei der Analyse des Bildinhalts eine 3-dimensionale Rekonstruktion zur Bewegungsschätzung auszunutzen, und/oder einen Vergleich von Grauwert-Merkmalen in einer Vorschubrichtung durchzuführen, und/oder Marken zu detektieren, und/oder farbliche Ausdrücke zu detektieren.

Durch eine entsprechende Analyse eines Bildinhalts, die typischerweise ein Grauwert-Bild oder ein Farbbild, das von der Messkamera geliefert wird, auswertet, ist es möglich, einen Auslösezeitpunkt mit guter Präzision festzulegen. Durch eine 3-dimensionale Rekonstruktion (beispielsweise eines zu erfassenden Objekts oder einer Unterlage), die beispielsweise auf der Verwendung von Bildinformationen aus mehreren Richtungen basieren kann, kann beispielsweise erkannt werden, wenn sich das Objekt in einer gewünschten Weise gegenüber einem vorherigen Zustand bewegt hat, und es kann ansprechend auf eine derartige Erkennung die Auslösung erfolgen. Die 3-dimensionale Rekonstruktion zur Bewegungsschätzung kann beispielsweise - anders als die präzise Vermessung - auf "flächigen" (einen in zwei Dimensionen ausgedehnten Bereich darstellende) Kamerabildern basieren und unter Umständen eine geringere Genauigkeit im Hinblick auf eine Auflösung von Oberflächenkonturen haben als beispielsweise ein Laser-Lichtschnitt. Dennoch kann die 3-dimensionale Rekonstruktion eine ausreichende Genauigkeit haben, um eine Auswertung eines Laser-Lichtschnitts auszulösen.

Durch einen Vergleich von Grauwert-Merkmalen in einer Vorschubrichtung kann beispielsweise eine Bewegungsdetektion basierend auf einem flächigen Bild (das nicht nur eine Aufnahme entlang eines Laser-Lichtschnitts zeigt) erfolgen. Entsprechend kann auch durch einen derartigen Vergleich von Grauwert-Merkmalen in einer Vorschubrichtung (die z.B. durch das Trägerbauteil bzw. eine Bewegung des Trägerbauteils vorgegeben sein kann) eine Bewegungsdetektion erfolgen. Diese Bewegungsdetektion kann wiederum ausreichend sein, um zu erkennen, dass sich das zu vermessende Objekt um eine bestimmte Strecke weiterbewegt hat, was wiederum ein gutes Kriterium zur Auslösung einer Messausgabe bzw. einer weitergehenden detaillierten Auswertung der Bildinformation ist.

Eine Detektion von Marken und/oder farblichen Ausdrücken in einem flächigen Bild kann beispielsweise eine Information darüber liefern, ob das zu vermessende Objekt sich in einem Umfang bewegt hat, der die Auslösung einer Messausgabe oder einer weitergehenden detailliertere Auswertung der Bildinformation (bzw. eines Laser-Lichtschnitts) angebracht erscheinen lässt.

Bei einem bevorzugten Ausführungsbeispiel ist die Auslöseeinrichtung ausgelegt, um bei einer Analyse des Bildinhalts Höheninformationen oder Oberflächeninformationen (beispielsweise im Hinblick auf Risse und/oder Spalten und/oder Kratzer) auszuwerten. Es wurde erkannt, dass auch eine Auswertung von Höheninformationen oder Oberflächeninformationen (beispielsweise in einem flächigen Bild) eine Information darüber liefern kann, ob eine Messausgabe erfolgen soll oder ob eine weitere Auswertung, beispielsweise eines Laser-Lichtschnitts erfolgen soll.

Bei einem bevorzugten Ausführungsbeispiel kann die Auslöseeinrichtung ausgelegt sein, um Bildinformationen, die aus verschiedenen Richtungen aufgenommen werden, zu berücksichtigen. Auf diese Weise kann beispielsweise eine sehr aussagkräftige Information zur Auslösung verwendet werden. Bildinformationen, die aus mehreren verschiedenen Richtungen aufgenommen werden, ermöglichen beispielsweise eine besonders präzise Bewegungsschätzung, wobei eine Bewegungsschätzung sehr gut zur Auslösung herangezogen werden kann.

Bei einem bevorzugten Ausführungsbeispiel ist die Auslöseeinrichtung ausgelegt, um eine oder mehrere Polarisationseigenschaften, oder eine Änderung einer oder mehrerer Polarisationseigenschaften, zu bestimmen (beispielsweise um verschiedene Materialien zu detektieren, und/oder um eine Variation der Eindringtiefe eines Laserstrahls zu erkennen und/oder um eine Relativbewegung zwischen einer Kamera und dem Messobjekt zu erkennen und/oder eine Relativbewegung zwischen einer Lichtquelle und dem Messobjekt zu erkennen) und in Abhängigkeit davon die Weiterleitung der Bildinformation oder die Auswertung der Bildinformation durch die Auswerteeinrichtung zur Bestimmung von Vermessungsergebnissen auszulösen. Auch von einer Polarisationsinformation oder insbesondere von einer Veränderung der Polarisationsinformation kann beispielsweise in effizienter Weise eine Auslöseinformation abgeleitet werden. Wiederum kann eine Veränderung der Polarisationsinformation bzw. von Polarisationseigenschaften ein Indiz dafür sein, dass sich das zu vermessende Objekt so stark bewegt hat, dass eine erneute Auslösung sinnvoll ist.

Bei einem bevorzugten Ausführungsbeispiel ist die Auslöseeinrichtung ausgelegt, um zu entscheiden, ob ein Ergebnis (beispielsweise eine Bildinformation oder ein Vermessungsergebnis) ausgegeben wird oder ob die Ausgabe unterdrückt wird. Die Unterdrückung einer Ausgabe kann beispielsweise sinnvoll sein, um eine Datenrate gering zu halten, und um eine Übertragung von nutzlosen oder redundanten Informationen zu vermeiden.

Gemäß der Erfindung ist die Auslöseeinrichtung ausgelegt, um verschiedene Merkmale des Bildinhalts zu analysieren. Zusätzlich ist die Auslöseeinrichtung ausgelegt, um Merkmale in verschiedenen Bereichen des Bildinhalts zu analysieren. Somit kann die Auslöseeinrichtung beispielsweise die Entscheidung darüber, ob eine Auslösung erfolgen soll, basierend auf einer Kombination mehrerer Merkmale durchführen, wodurch die Zuverlässigkeit der Entscheidung sich erhöht. Beispielsweise können Informationen, die das Vorhandensein verschiedener Merkmale beschreiben, in einer gewichteten Weise kombiniert werden, um zu einer Entscheidung zu kommen. Durch eine Auswertung von Merkmalen in verschiedenen Bereichen des Bildinhalts können sachlich unterschiedliche Bildinhalte, wie z.B. ein zu vermessendes Objekt und auch ein Trägerbauteil, gleichsam betrachtet werden. Gemäß der Erfindung wird auch entschieden, in welchen Bildinhalten relevante bzw. zuverlässige Merkmale vorliegen. Auf diese Weise kann bei Berücksichtigung eines flächigen Bildes oder Bildausschnitts unter Umständen eine noch zuverlässigere Entscheidung über die Auslösung erfolgen als bei Betrachtung von Merkmalen nur entlang einer Laserlinie.

Bei einem bevorzugten Ausführungsbeispiel ist die Auslöseeinrichtung ausgelegt, um ein oder mehrere Steuersignale für einen oder mehrere Laserliniengeneratoren zu erzeugen und/oder um ein oder mehrere Steuersignale für ein oder mehrere Beleuchtungseinrichtungen zu erzeugen, um eine Beleuchtung des Messobjekts abhängig von dem Bildinhalt der Bildinformation zu verändern. Dieses Ausführungsbeispiel basiert auf der Erkenntnis, dass beispielsweise der Laserliniengenerator oder eine andere Beleuchtungseinrichtung angesteuert werden können, um eine projizierte Linie an eine gewünschte Position zu bringen. Wird beispielsweise erkannt, dass eine projizierte Linie noch nicht an einer gewünschten Position liegt, so kann beispielsweise der Laserliniengenerator oder eine andere Beleuchtungseinrichtung entsprechend angesteuerte werden. Im Übrigen kann aufgrund der Bildinformation auch erkannt werden, dass beispielsweise eine projizierte Laserlinie zu dunkel ist oder einen schlechten Kontrast gibt oder zu hell ist. Entsprechend kann die Erzeugung einer projizierte Laserlinie durch Ansteuerung des Laserliniengenerators oder durch Ansteuerung einer anderen Beleuchtungseinrichtung an die Erfordernisse angepasst werden, und zwar beispielsweise sowohl im Hinblick auf eine Lage der projizierte Linie als auch im Hinblick auf sonstige Eigenschaften, wie eine Helligkeit der projizierte Linie.

Bei einem bevorzugten Ausführungsbeispiel ist die Auslöseeinrichtung ausgelegt, um basierend auf dem Bildinhalt der Bildinformation zu erkennen, ob eine interessierende Region des Messobjekts (beispielsweise mit einer gewünschten Genauigkeit) vermessbar ist oder nicht, und um abhängig davon die Weiterleitung der Bildinformation oder die Auswertung der Bildinformation durch die Auswerteeinrichtung zur Bestimmung von Vermessungsergebnissen auszulösen. Entsprechend kann eine Weiterleitung der Bildinformation oder die Auswertung nur dann durchgeführt werden, wenn der Bildinhalt erkennen lässt, dass eine interessierende Region des Messobjekts vermessbar ist und beispielsweise nicht abgeschattet ist. Somit kann eine unnötige Datenübertragung (Bildübertragung) oder Auswertung vermieden werden, was Ressourcen einspart.

Bei einem bevorzugten Ausführungsbeispiel ist die Vorrichtung ausgelegt, ein Messobjekt 3-dimensional abzutasten, ohne dass eine Kamera zur Erzeugung der Bildinformation und/oder einer Lichtquelle zur Bestrahlung des Messobjekts fest geführt ist, oder wobei die Kamera zur Erzeugung der Bildinformation und/oder die Lichtquelle zur Bestrahlung des Messobjekts für eine manuelle Führung ausgelegt ist. Durch die Auslösung der Messausgabe oder der (weiteren detaillierteren) Auswertung der Bildinformation wird ermöglicht, dass eine 3-dimensionale Abtastung eines Messobjekts vorgenommen werden kann, ohne dass eine feste Lagerelation zwischen dem zu vermessenden Objekt (oder einem Trägerbauteil, das das zu vermessende Objekt trägt) und der Lichtquelle und/oder der Kamera erzwungen werden muss. Vielmehr ermöglicht es die auf einer Auswertung einer Bildinformation basierende Auslösung der Messausgabe bzw. der weiteren detaillierteren Bildauswertung, dass Lichtquelle zur Bestrahlung des Messobjekts und/oder die Kamera nur lose oder sogar manuell geführt sind. Somit wird eine 3-dimensionale Abtastung des Messobjekts selbst in schwierigen Situationen, beispielsweise wenn ein Messobjekt nicht transportabel ist oder sich in einer mit einer festen Vorrichtung schwierig abzutastenden Lage befindet, ermöglicht.

Bei einem bevorzugten Ausführungsbeispiel ist die Vorrichtung ausgelegt, um ein Objekt im Außenraum abzutasten (z.B. abzuscannen), um einen Fahrweg (z.B. eine Straße oder eine Schiene) zu vermessen oder um eine Fehlerstelle zu erkennen oder zu vermessen. Durch die Auslösung der Messausgabe oder der weiteren detaillierten Auswertung der Bildinformation basierend auf einem Bildinhalt der Bildinformation kann die 3-dimensionale Vermessung eines Objekts nicht nur mit einer festen stationären Vorrichtung erfolgen, sondern auch in flexibler Weise, beispielsweise im Außenraum, angewendet werden, wo beispielsweise eine feste Führung zwischen Messobjekt und Laserliniengenerator oder zwischen Messobjekt und Messkamera nicht möglich ist. Somit eröffnet die erfindungsgemäße, auf einem Bildinhalt basierende Auslösung neue Anwendungsbereiche.

Ausführungsbeispiele gemäß der vorliegenden Erfindung schaffen ein Verfahren zur 3-dimensionale Vermessung eines Objekts. Das Verfahren umfasst unter anderem ein Empfangen einer Bildinformation von einer Messkamera und ein Auslösen, abhängig von einem Bildinhalt der Bildinformation, einer Messausgabe (beispielsweise einer Weiterleitung der Bildinformation an eine Auswerteeinrichtung zur Bestimmung von Vermessungsergebnissen) zur Auswertung der Bildinformation durch eine Auswerteeinrichtung zur Bestimmung von Vermessungsergebnissen. Das entsprechende Verfahren basiert auf denselben Überlegungen wie die oben erläuterte Vorrichtung. Das Verfahren kann auch um alle Merkmale und Funktionalitäten der Vorrichtung, wie sie hierin beschrieben ist, ergänzt werden, und zwar einzeln oder in Kombination.

Ein weiteres Ausführungsbeispiel gemäß der Erfindung schafft ein Computerprogramm zur Durchführung des entsprechenden Verfahrens.

Figurenkurzbeschreibung

Ausführungsbeispiele gemäß der vorliegenden Erfindung werden nachfolgend Bezug nehmend auf die beiliegende Figuren näher erläutert.

Es zeigen:

Fig. 1    eine schematische Darstellung einer Vorrichtung zur 3-dimensionalen Vermessung eines Objekts, gemäß einem Ausführungsbeispiel der vorliegenden Erfindung;

Fig. 2    ein Blockschaltbild einer Vorrichtung zur 3-dimensionalen Vermessung eines Objekts, gemäß einem Ausführungsbeispiel der vorliegenden Erfindung;

Fig. 3    eine schematische Darstellung einer Vorrichtung zur 3-dimensionalen Vermessung eines Objekts, gemäß einem Ausführungsbeispiel der vorliegenden Erfindung;

Fig. 4    eine schematische Darstellung eines Aufbaus zur Lokalisation einer Laserlinie in Bezug zu einem Messobjekt mittels Markierungen auf einer Unterlage (Zeiger) gemäß einem Ausführungsbeispiel der vorliegenden Erfindung;

Fig. 5    eine schematische Darstellung einer Anordnung und Auswertung von Markierungen auf der Unterlage, gemäß einem Ausführungsbeispiel der vorliegenden Erfindung;

Fig. 6    eine schematische Darstellung des Ablaufs bei einer Bestimmung einer Position einer projizierten Linie, gemäß einem Ausführungsbeispiel der vorliegenden Erfindung; und

Fig. 7 eine schematische Darstellung einer Vorrichtung zur 3-dimensionalen Vermessung eines Objekts;

Fig. 8 ein Flussdiagramm eines Verfahrens, gemäß einem Ausführungsbeispiel der vorliegenden Erfindung; und

Fig. 9 ein Flussdiagramm eines Verfahrens gemäß einem Ausführungsbeispiel der vorliegenden Erfindung.

Detaillierte Beschreibung der Ausführungsbeispiele

Details der Ausführungsbeispiele werden nachfolgend Bezug nehmend auf die oben erläuterten Figuren beschrieben.

Es sei darauf hingewiesen, dass Details der verschiedenen Ausführungsbeispiele miteinander kombinierbar sind, soweit keine zwingenden Gründe dagegen sprechen.

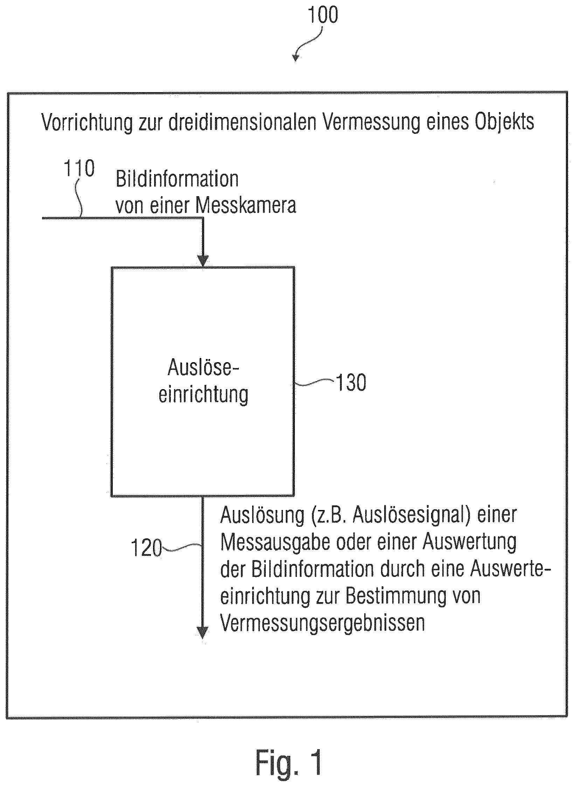

1. Vorrichtung zur 3-dimensionalen Vermessung eines Objekts, gemäß Fig. 1

Fig. 1 zeigt eine schematische Vorrichtung zur 3-dimensionalen Vermessung eines Objekts, gemäß einem Ausführungsbeispiel der vorliegenden Erfindung. Die Vorrichtung 100 zur 3-dimensionalen Vermessung eines Objekts ist ausgelegt, um eine Bildinformation 110 von einer Messkamera zu erhalten bzw. zu erfassen. Die hier nicht gezeigte Messkamera kann beispielsweise Teil der Vorrichtung 100 sein, oder kann eine externe Komponente sein. Die Vorrichtung 100 ist insbesondere ausgelegt, um ein Auslösesignal zu erhalten, das beispielsweise eine Messausgabe oder eine Auswertung der Bildinformation durch eine Auswerteeinrichtung zur Bestimmung von Vermessungsergebnissen auslöst. Das Auslösesignal ist hier beispielsweise mit 120 bezeichnet. Die Vorrichtung 100 umfasst eine Auslöseeinrichtung 130, die hier auch als "Trigger-Einrichtung" bezeichnet wird. Die Auslöseeinrichtung 130 ist ausgelegt, um die Bildinformation 110 von der Messkamera zu erhalten und um abhängig von dem Bildinhalt der Bildinformation eine Messausgabe (beispielsweise eine Weiterleitung der Bildinformation an eine Auswerteeinrichtung zur Bestimmung von Vermessungsergebnissen) oder eine weitere, detailliertere Auswertung der Bildinformation durch die Auswerteeinrichtung zur Bestimmung von Vermessungsergebnissen auszulösen.

Somit ist festzuhalten, dass die Auswerteeinrichtung 130 beispielsweise anhand der von der Messkamera erhaltenen Bildinformation 110 festlegen kann, wann eine Bildinformation von der Messkamera (bzw. die Bildinformation 110 von der Messkamera) für eine weitere, detaillierte Auswertung verwendet wird. Die Auslöseeinrichtung 130 kann zu diesem Zweck ein Auslösesignal erzeugen, das entweder eine Weitergabe der Bildinformation 110 auslöst, oder das eine tatsächliche Verwendung der Bildinformation 110 für eine weitere, detailliertere Auswertung auslöst.

Somit ist festzuhalten, dass durch eine erste Stufe einer Bildverarbeitung, die durch die Auslöseeinrichtung 130 ausgeführt wird, entschieden werden kann, welche Bildinformation (z.B. welches Bild aus einer Sequenz von Bildern) für eine weitere genauere Auswertung (beispielsweise für eine 3-dimensionale Vermessung eines Objekts) herangezogen wird. Somit kann die Auslöseeinrichtung 130 beispielsweise aufgrund einer Bilderkennung (oder allgemein abhängig von einem Bildinhalt der Bildinformation 110) einen Zeitpunkt erkennen, zu dem die Bildinformation für eine weitere, detailliertere Auswertung verwendbar ist. Somit kann beispielsweise erreicht werden, dass eine Ausgabe der Bildinformation 110 von einer Messkamera bzw. von einem Bildsensor der Messkamera an eine Auswerteeinrichtung zur Bestimmung von Vermessungsergebnissen nur dann erfolgt, wenn die Auslöseeinrichtung 130 erkennt, dass die Bildinformation eine weitere detailliertere Auswertung als erfolgversprechend erscheinen lässt. Beispielsweise kann die Auswerteeinrichtung 130 basierend auf dem Bildinhalt der Bildinformation bestimmen, ob die Bildinformation gewisse Grundvoraussetzungen erfüllt, die für die weitere, detailliertere Auswertung der Bildinformation durch die Auswerteeinrichtung zur Bestimmung von Vermessungsergebnissen erforderlich sind. Alternativ oder zusätzlich kann die Auslöseeinrichtung 130 beispielsweise bestimmen, ob sich der Bildinhalt der Bildinformation im Hinblick auf eine für eine frühere (weitere) detaillierte Auswertung herangezogene Bildinformation ausreichend stark verändert hat. Somit kann beispielsweise eine mehrmalige Ausgabe oder Auswertung von nahezu identischer Bildinformation vermieden werden.

Die Auslöseeinrichtung 130 kann beispielsweise dann besonders sinnvoll sein, wenn ein geeigneter oder optimaler Zeitpunkt zur Ausgabe der Bildinformation oder zur weiteren detaillierten Auswertung der Bildinformation nicht durch andere, beispielsweise mechanische, Sensoren erkannt werden kann. Im Übrigen ist die Erkennung des geeigneten oder optimalen Zeitpunkts für die Ausgabe oder für die weitere detaillierte Auswertung der Bildinformation besonders hilfreich, wenn eine Lichtquelle und/oder eine Kamera, die bei der 3-dimensionalen Vermessung des Objekts zur Beleuchtung des Objekts verwendet werden, frei beweglich sind.

Im Folgenden werden einige Details im Hinblick auf die Vorrichtung zur 3-dimensionalen Vermessung eines Objekts und im Hinblick auf die Auslöseeinrichtung beschrieben, die für sich genommen verwendet werden können, oder die optional in Verbindung mit dem oben beschriebenen Ausführungsbeispiel verwendet werden können.

Gemäß einem Aspekt der vorliegenden Erfindung kann die Vorrichtung 100 beispielsweise im Zusammenhang mit einem System verwendet werden, das eine Laserlichtschnitt-Abtastung eines Objekts (beispielsweise zur 3-dimensionalen Vermessung des Objekts) durchführt. Die Laserlichtschnitt-Abtastung wird auch als "Laserlichtschnitt-Scan" bezeichnet.

Die hierin beschriebene Vorrichtung zur 3-dimensionalen Vermessung eines Objekts bietet bei einigen Ausführungsbeispielen den Vorteil, dass eine beliebige Positionierung einer Laserlinie (oder allgemein einer projizierten Linie) über einem Messobjekt möglich ist, was beispielsweise ein freihändiges Abtasten (bzw. Scannen) ermöglicht. Bei einigen Ausführungsbeispielen ermöglicht die hierin beschriebene Vorrichtung zur 3-dimensionalen Vermessung eines Objekts auch eine Unabhängigkeit von Positionsgebern, beispielsweise eine Unabhängigkeit von herkömmlichen mechanischen Positionsgebern, die eine Relation zwischen einem zu erfassenden (oder zu vermessenden) Objekt (oder zumindest einem Trägerbauteil, das das zu erfassende Objekt trägt) und einem Laserliniengenerator (oder mehreren Laserliniengeneratoren) und/oder einer Messkamera (oder mehreren Messkameras) erfassen. Gemäß einem weiteren Aspekt der vorliegenden Erfindung ermöglichen einige Ausführungsbeispiele eine optimale Auflösung je nach Scanaufgabe und Oberfläche/Struktur des Messobjekts.

Im Folgenden werden eine ganze Reihe von Details im Hinblick auf eine Auslösung bzw. "Triggerung" beschrieben, die einzeln oder in Kombination mit dem Ausführungsbeispiel gemäß der Fig. 1 (oder in Verbindung mit den weiteren hierin beschriebenen Ausführungsbeispielen) verwendet werden können.

Gemäß einem Aspekt der Erfindung unterscheidet sich die erfindungsgemäße Lösung zur Auslösung bzw. Triggerung der Bildaufnahme von herkömmlichen Konzepten unter anderem dadurch,

- dass keine elektrische Kopplung zwischen Vortrieb des Messobjekts und Messsystems zum Beispiel durch Inkrementalgeber oder Zeitgeben (Timer) für ein festes Zeitintervall besteht; und

- die Triggerung der Messkamera ausschließlich durch den Bildinhalt bzw. daraus abgeleitete Merkmale erfolgt (oder die Auslösung einer Messausgabe von der Messkamera ausschließlich durch den Bildinhalt folgt).

Dies bedeutet, dass das Messsystem (beispielsweise die Auslöseeinrichtung 130) permanent (oder zumindest über einen ausgedehnten Zeitraum hinweg) eine Bildanalyse auf der Grundlage geeigneter Merkmale durchführt und nur bei Erfüllung bestimmter vordefinierter Kriterien eine Bildausgabe vornimmt, also von außen betrachtet ein selbstausgelöstes bzw. selbstgetriggertes Messergebnis ausgibt. Dabei können beispielsweise ein oder mehrere der im Folgenden beschriebenen Merkmale zur Detektion einer Aufnahme (oder zur Auslösung einer Messausgabe oder einer Auswertung der Bildinformation durch eine Auswerteeinrichtung zur Bestimmung von Vermessungsergebnissen) gewählt werden.

Beispielsweise können Merkmale eines Laserlichtschnitts zur Detektion einer Aufnahme (bzw. zur Auslösung) verwendet werden. Beispielsweise ist es möglich, 3-dimensionale Marken auf der Oberfläche einer Unterlage, auf der sich das Messobjekt befindet, oder 3-dimensionale Marken am Messobjekt (die beispielsweise in einem Laserlichtschnitt ersichtlich sind) zur Detektion einer Aufnahme zu wählen. Alternativ oder zusätzlich ist es möglich, 2-dimensionale optische Eigenschaften entlang der Laserlinie zur Detektion einer Aufnahme (oder zur Auslösung) zu verwenden. Alternativ oder zusätzlich ist es möglich, allgemeine Merkmale aus einer Verarbeitungskette innerhalb der Messkamera zur Detektion einer Aufnahme (oder zur Auslösung) zu wählen. Zusammengefasst kann man also sagen, dass bei Auswertung eines Laserlichtschnitts dreidimensionale Marken auf der Oberfläche der Unterlage, auf der sich das Messobjekt befindet, und/oder 3-dimensionale Marken am Messobjekt und/der 2-dimensionale optische Eigenschaften entlang der Laserlinie und/oder allgemeine Merkmale aus der Verarbeitungskette innerhalb der Messkamera zur Detektion einer Aufnahme gewählt werden können.

Bei 3-dimensionalen Marken auf der Oberfläche der Unterlage, auf der sich das Messobjekt befindet, oder bei 3-dimensionalen Marken am Messobjekt kann es sich beispielsweise um Erhebungen oder Dellen (wie z.B. einen Braille-Code) und/oder um Bohrungen bzw. Löcher und/oder um Kanten und Stufen, z.B. durch einen Beginn des Messobjekts, handeln. Solche 3-dimensionalen Marken auf der Oberfläche der Unterlage, auf der sich das Messobjekt befindet, oder am Messobjekt können beispielsweise in einem Abbild des Laserlichtschnitts erkannt werden, z. B. als Helligkeitsveränderung oder als Abweichungen von einem geraden Verlauf des Laserlichtschnitts. In anderen Worten eine Messausgabe oder eine weitere Auswertung der Bildinformation kann beispielsweise ausgelöst werden, wenn in einer Bildinformation, die ein Abbild eines Laserlichtschnitts zeigt, erkannt wird, dass der Laserlichtschnitt eine oder mehrere 3-dimensionale Marken auf der Oberfläche der Unterlage, auf der sich das Messobjekt befindet, oder eine oder mehrere 3-dimensionale Marken an dem Messobjekt schneidet. Unter Umständen können hier auch bestimmte Eigenschaften der 3-dimensionalen Marken, beispielsweise deren Abstand oder relative Anordnung zueinander, berücksichtigt werden. Die 3-dimensionalen Marken können optional auch durch Linien vorbestimmter oder bekannter Lage definiert werden, so dass anhand einer Bildauswertung eine Lage der projizierten Linie (also des Laserlichtschnitts) erkannt werden kann, und so dass die Auslösung der Messausgabe oder der weiteren Auswertung aufgrund der Erkennung einer bestimmten Lage der projizierten Linie (des Laserlichtschnitts) erfolgen kann.

Weiterhin können, wie oben bereits kurz erläutert, alternative oder zusätzlich 2-dimensionale optische Eigenschaften entlang der Laserlinie für die Detektion einer Aufnahme (bzw. für die Auslösung einer Messausgabe oder einer weiteren Auswertung der Bildinformation) herangezogen werden. Eine mögliche 2-dimensionale optische Eigenschaft entlang der Laserlinie kann in einer Veränderung der Reflektanz bestehen, die beispielsweise durch eine matte und/oder eine metallisierte Oberfläche hervorgerufen werden kann, oder die beispielsweise durch eine Veränderung eines Reflexionswinkels der Oberfläche hervorgerufen werden kann. So kann beispielsweise anhand einer Auswertung eines Abbilds einer Laserlinie (die durch einen Laserlichtschnitt gebildet ist) erkannt werden, wenn der Laserlichtschnitt auf einen Abschnitt mit matter Oberfläche oder mit metallisierter Oberfläche oder mit verändertem Reflexionswinkel der Oberfläche trifft bzw. einen solchen Abschnitt überstreicht. Die Erkennung einer Veränderung einer Reflektanz kann beispielsweise einfach aufgrund einer Erkennung einer veränderten Intensität des Abbilds des Laserlichtschnitts detektiert werden. Hierbei kann einerseits das bloße Vorhandensein einer Veränderung der Reflektanz oder auch ein bestimmtes räumliches Muster, mit dem sich die Reflektanz verändert, die Auslösung einer Messausgabe oder einer Auswertung der Bildinformation verursachen. Als 2-dimensionale optische Eigenschaft entlang der Laserlinie kann auch eine Veränderung einer Volumenstreuung ausgewertet werden. Dies kann beispielsweise durch das Vorhandensein einer optisch dichten Auflage auf einem volumensteuernden Material verursacht werden. Beispielsweise kann dies auch durch das Vorhandensein von Kupfer auf einem FR4-Material bzw. Trägermaterial verursacht werden. Somit kann eine Veränderung der Volumenstreuung entlang einer Laserlinie durch eine Bildverarbeitung erkannt werden, und das Vorhandensein der Veränderung der Volumenstreuung, oder ein erkanntes Muster der Veränderung der Volumenstreuung entlang der Laserlinie, kann verwendet werden, um eine Messausgabe oder eine Auswertung der Bildinformation auszulösen. Ferner kann als 2-dimensionale optische Eigenschaft entlang der Laserlinie auch das Vorhandensein eines farblichen Aufdrucks bzw. das Vorhandensein mehrerer farblicher Aufdrucke erkannt und zur Auslösung einer Messausgabe oder zur Auslösung der Auswertung der Bildinformation herangezogen werden. Ein oder mehrere farbliche Aufdrucke können beispielsweise passend bzw. komplementär zu einer Farbe der Laserlinie sein. Dadurch ist das Vorhandensein eines farblichen Aufdrucks bzw. mehrerer farblicher Aufdrucke entlang der Laserlinie in einem Abbild der Laserlinie bzw. des Laserlichtschnitts mit geringem Aufwand detektierbar uns somit zur Auslösung nutzbar.

Wird ein Laserlichtschnitt oder ein Merkmal eines Laserlichtschnitts zur Detektion einer Aufnahme (bzw. zur Auslösung einer Messausgabe oder zur Auswertung einer Bildinformation) herangezogen, so können auch allgemeine Merkmale aus der Verarbeitungskette innerhalb der Messkamera herangezogen werden, um die Auslösung zu verursachen. Beispielsweise kann als Merkmal aus der Verarbeitungskette innerhalb der Messkamera eine Zuverlässigkeit der detektierten Linie (bzw. eine entsprechende Information über die Zuverlässigkeit) herangezogen werden. So können beispielsweise Zwischenergebnisse aus der Verarbeitung der Laserlinie verwendet werden (wobei solche Zwischenergebnisse beispielsweise eine Information über die Zuverlässigkeit der detektierten Linie aufweisen können). Alternativ oder zusätzlich kann ein Start (bzw. eine Auslösung) erfolgen, sobald eine Laserlinie in dem Bild erscheint und/oder sobald durch eine Bildverarbeitung eine Laserlinie mit einem vorgegebenen Zuverlässigkeitsmaß erkannt wird. Alternativ oder zusätzlich kann auch eine lokale Breite der Laserlinie als allgemeines Merkmal aus der Verarbeitungskette innerhalb der Messkamera zur Detektion einer Aufnahme bzw. zur Auslösung einer Messausgabe oder einer Auswertung der Bildinformation herangezogen werden. Die lokale Breite der Laserlinie ist dabei ein an die Volumenstreuung oder die Reflektanz gekoppeltes Merkmal.

Zusammenfassend ist festzuhalten, dass verschiedene Informationen, die bei der Auswertung eines Laserlichtschnitts abgeleitet werden können, einzeln oder in Kombination zur Detektion einer Aufnahme bzw. zur Auslösung einer Messausgabe oder zur Auslösung einer Auswertung der Bildinformation herangezogen werden können.

Alternativ oder zusätzlich zu einer Auswertung eines Laserlichtschnitts (bzw. eines Abbilds eines Laserlichtschnitts) können auch ein Graubild und Vorschub-Korrelation zur Detektion einer Aufnahme (oder zur Auslösung einer Messausgabe oder zur Auslösung einer Auswertung der Bildinformation) herangezogen werden. Es kann beispielsweise ein Graubild ausgewertet werden, das nicht nur die projizierte Linie oder den Laserlichtschnitt zeigt, sondern ein umfassenderes Bild, beispielsweise des zu vermessenden Objekts und/oder des Trägerbauteils, das das zu vermessende Objekt trägt. Beispielsweise kann basierend auf einem Graubild eine Korrelation aufeinanderfolgender Bilder und daraus eine Ableitung einer Bewegungsinformation erfolgen, wobei die Bewegungsinformation dann zur Auslösung einer Messausgabe oder zur Auslösung einer Auswertung der Bildinformation dienen kann. Die Korrelation aufeinanderfolgender Bilder und die Ableitung der Bewegungsinformation kann beispielsweise mit einer flächigen Beleuchtung oder mit einer punktförmigen Beleuchtung zur optischen Abtastung der Oberfläche (beispielsweise einer oder mehrerer Punkte die Oberfläche) erfolgen. Bei flächiger Beleuchtung kann beispielsweise ein flächiger Bildausschnitt ausgewertet werden, und es kann eine Bewegungsinformation anhand der Auswertung eines Flächenabschnitts abgeleitet werden. Bei punktförmiger Beleuchtung einer oder mehrerer Punkte des Objekts kann beispielsweise detektiert werden, ob ein Abbild der beleuchteten Punkte sich gegenüber einem vorherigen Zustand bewegt. Alternativ oder zusätzlich zur Korrelation aufeinanderfolgender Bilder können auch optische Merkmale zur Detektion einer Aufnahme bzw. zur Auslösung einer Messausgabe oder zur Auslösung einer Auswertung einer Bildinformation herangezogen werden. Alternativ oder zusätzlich kann (beispielsweise basierend auf einem Graubild und einer Vorschub-Korrelation) eine 3-dimensionale Stereorekonstruktion auch zur Bewegungsschätzung ausgenutzt werden. Dabei können Entfernungs- bzw. Positionsinformationen zum Auslösen eines Messvorgangs (bzw. zum Auslösen einer Messausgabe oder einer Auswertung der Bildinformation) ausgenutzt werden.

Bei Verwendung eines Graubilds und einer Vorschub-Korrelation kann, alternativ oder zusätzlich zu den vorher beschriebenen Auswertungen, auch eine Detektion von Marken und farblichen Änderungen erfolgen. So können beispielsweise Marken, die an dem zu vermessenden Objekt angebracht sind, und Übergänge zwischen Bereichen unterschiedlicher Farbe ausgewertet werden, um eine Messausgabe auszulösen oder um eine Auswertung der Bildinformation auszulösen.

Alternativ oder zusätzlich zur Auswertung eines Laserlichtschnitts bzw. alternativ oder zusätzlich zur Auswertung eines Graubilds mit Vorschubkorrelation kann eine Auswertung von Höheninformationen, z.B. von Rissen, und/oder Spalten und/oder Kratzern, erfolgen. Beispielsweise kann eine Beschreibung von Rissen und Spalten z.B. durch fehlende Reflexionen mit bestimmter örtlicher Ausdehnung erfolgen. Hierbei kann es beispielsweise zu einer Auswertung von lokalen Sprüngen der Höheninformation mit bestimmter Breite und/oder zu einer Auswertung von zeitlichen Sprüngen der Höheninformation mit bestimmten zeitlichen Eigenschaften kommen. Insgesamt kann somit anhand von Höheninformationen eine Detektion einer Aufnahme (bzw. die Auslösung einer Messausgabe oder einer Auswertung einer Bildinformation) erfolgen.

Alternativ oder zusätzlich zur Auswertung eines Laserlichtschnitts bzw. alternativ oder zusätzlich zur Auswertung eines Graubilds mit Vorschubkorrelation bzw. alternativ oder zusätzlich zur Verwendung von Höheninformationen kann eine Aufnahme, beispielsweise eines zu vermessenden Objekts) aus verschiedenen Richtungen mit mehreren Kameras oder mehreren Laserliniengeneratoren in verschiedenen Lagen erfolgen, um eine Detektion einer Aufnahme zu erreichen. Dabei können beispielsweise Unterschiede in den detektierten Eigenschaften aus verschiedenen Richtungen zur Detektion einer Aufnahme herangezogen werden und/oder es können Verdeckungen oder Mehrfach-Reflexionen für eine Detektion einer Aufnahme einbezogen werden.

Alternativ oder zusätzlich zu der Auswertung eines Laserlichtschnitts bzw. alternativ oder zusätzlich zu der Auswertung eines Graubilds mit Vorschubkorrelation bzw. alternativ oder zusätzlich zu der Auswertung von Höheninformation bzw. alternativ oder zusätzlich zu der Auswertung einer Aufnahme aus verschiedenen Richtungen kann eine Änderung der Polarisation ausgewertet werden und/oder kann eine Detektion verschiedener Materialien ausgewertet werden, um eine Messausgabe oder eine Auswertung der Bildinformation auszulösen. Die Detektion verschiedener Materialien kann beispielsweise durch eine Multispektralanalyse erfolgen. Alternativ oder zusätzlich kann bei der Detektion verschiedener Materialien auch eine Erkennung der Variation der Eindringtiefe des Laserstrahls erfolgen. Somit kann die Detektion des Vorhandenseins verschiedener Materialien beispielsweise zu einer entsprechenden Auslösung einer Messausgabe oder einer Auswertung der Bildinformation dienen.

Im Folgenden werden verschiedene Aspekte im Hinblick auf eine Merkmalsbestimmung erläutert, die optional bei den hierin beschriebenen Ausführungsbeispielen eingesetzt werden können.

Beispielsweise kann eine Analyse der oben dargestellten Eigenschaften (oder Merkmale) (zum Beispiel Merkmale des Laserlichtschnitts, Merkmale des Graubilds, und so weiter) auf dem Sensor oder auf einer nachgelagerten Verarbeitungseinheit erfolgen. Beispielsweise kann der Sensor ausgelegt sein, um eine erste Analyse (beispielsweise zur Auslösung einer Messausgabe oder zur Auslösung einer weiteren detaillierteren Auswertung der Bildinformation durch eine Auswerteeinrichtung zur Bestimmung von Vermessungsergebnissen) basierend auf Analogsignalen von einem Bildsensor (also beispielsweise noch vor einer Digitalisierung) erfolgen. Alternativ dazu kann bei einigen Ausführungsbeispielen die Auswertung zur Auslösung einer Messausgabe oder zur Auslösung einer Auswertung der Bildinformation in einer separaten Verarbeitungseinheit erfolgen (beispielsweise basierend auf digitalisierten Signalen des Bildsensors).

Gemäß einem Aspekt kann eine Bildverarbeitung mittels Software oder mittels speziell dazu entwickelten Hardwareblöcken erfolgen.

Gemäß einem Aspekt der Erfindung kann eine sofortige Bestimmung der Ergebnisse ohne oder mit sehr geringer Latenz erfolgen. In anderen Worten, die durch die Auslöseeinrichtung durchgeführte, typischerweise recht einfache Auswertung kann mit hoher Geschwindigkeit erfolgen, während hingegen eine nachfolgende weitere, detailliertere Auswertung der Bildinformation durch eine Auswerteeinrichtung zur Bestimmung von Vermessungsergebnisse im Regelfall deutlich aufwendiger und zeitintensiver ist.

Gemäß einem Aspekt der Erfindung erfolgt die Auswertung (durch die Auslöseeinrichtung) zur Entscheidung, ob Ergebnisse ausgegeben werden (beispielsweise durch Auslösung einer Messausgabe) oder die Ausgabe unterdrückt wird.

Gemäß einem Aspekt der Erfindung kann eine Auswertung verschiedene Merkmale auf dem Sensorfeld an verschiedenen Regionen-von-Interesse ("Regions-of-Interest") erfolgen.

Gemäß einem weiteren Aspekt der Erfindung kann eine Nutzung der detektierten Eigenschaften zur Entscheidung der Lage der untersuchten Regionen-von-Interesse ("Regions-of-Interest") erfolgen.

Gemäß einem weiteren Aspekt der Erfindung kann eine Steuerung der Merkmalsbestimmung durch eine externe digitale Schnittstelle für synchrone oder asynchrone Parameter, anhand der die Triggerung entschieden wird, erfolgen. Beispielsweise kann über die externe digitale Schnittstelle bestimmt werden, durch welche der Merkmale eine Auslösung (Triggerung) erfolgen soll. Somit kann beispielsweise die Funktion der Auslöseeinrichtung an die jeweiligen Gegebenheiten eines Bildinhalts (z.B. eines zu vermessenden Objekts) angepasst werden.

Gemäß einem weiteren Aspekt kann beispielsweise eine direkte Ausgabe von Steuersignalen für Laserliniengeneratoren und Beleuchtungssysteme zur Veränderung bzw. Umschaltung einer Beleuchtung erfolgen. Es kann also beispielsweise die Auslöseeinrichtung Steuersignale für einen oder mehrere Laserliniengeneratoren und/oder für ein oder mehrere andere Beleuchtungssysteme erzeugen. Beispielsweise ansprechend auf die Erkennung eines Auslöseereignisses durch die Auslöseeinrichtung kann ein Laserliniengenerator angesteuert werden, um eine Laserlinie zu verändern, beispielsweise zu verschieben. Alternativ dazu kann ein Laserliniengenerator durch die Auslöseeinrichtung auch dazu veranlasst werden, eine Laserlinie zu aktivieren oder in der Intensität zu erhöhen.

Zusammenfassend ist somit festzuhalten, dass die Vorrichtung 100, wie sie anhand der Fig. 1 beschrieben wurde, optional um viele Details ergänzt werden kann. Die Auslösung durch die Auslöseeinrichtung 130 kann optional basierend auf Merkmalen, die durch einen Laserlichtschnitt erhalten wurden, und/oder basierend auf Merkmalen, die durch ein Graubild und Vorschub-Korrelation erhalten wurden, erfolgen. Alternativ oder zusätzlich können Merkmale verwendet werden, die auf Höheninformation basieren, und/oder Merkmale, die auf einer Aufnahme aus verschiedenen Richtungen basieren. Ferner können alternativ oder zusätzlich Merkmale herangezogen werden, die auf einer Änderung der Polarisation basieren, und/oder Merkmale, die auf einer Detektion verschiedener Materialien basieren.

Wie oben erläutert wurde, kann die Merkmalsbestimmung in verschiedener Weise erfolgen, beispielsweise auf dem Sensor oder auf einer nachgelagerten Verarbeitungseinheit. Die Merkmalsbestimmung kann in Hardware oder in Software erfolgen, typischerweise aber mit vergleichsweise geringer Latenz, um eine rechtzeitige Auslösung einer Messausgabe oder einer weiteren, detaillierteren Auswertung der Bildinformation zu bewirken. Bei der Auswertung gewonnener Information können auch Ansteuerinformationen, beispielsweise für die weitere detailliertere Auswertung der Bildinformation durch eine Auswerteeinrichtung zur Bestimmung von Vermessungsergebnissen, genutzt werden. Außerdem kann wie die Auslöseeinrichtung auch ein Laserliniengenerator und/oder ein Beleuchtungssystem gesteuert werden.

Im Übrigen sei darauf hingewiesen, dass anhand der Fig. 1 das erläuterte Konzept durch alle Merkmale und Funktionalitäten ergänzt werden kann, die in dem vorliegenden Dokument beschrieben sind, und zwar einzeln oder in Kombination.

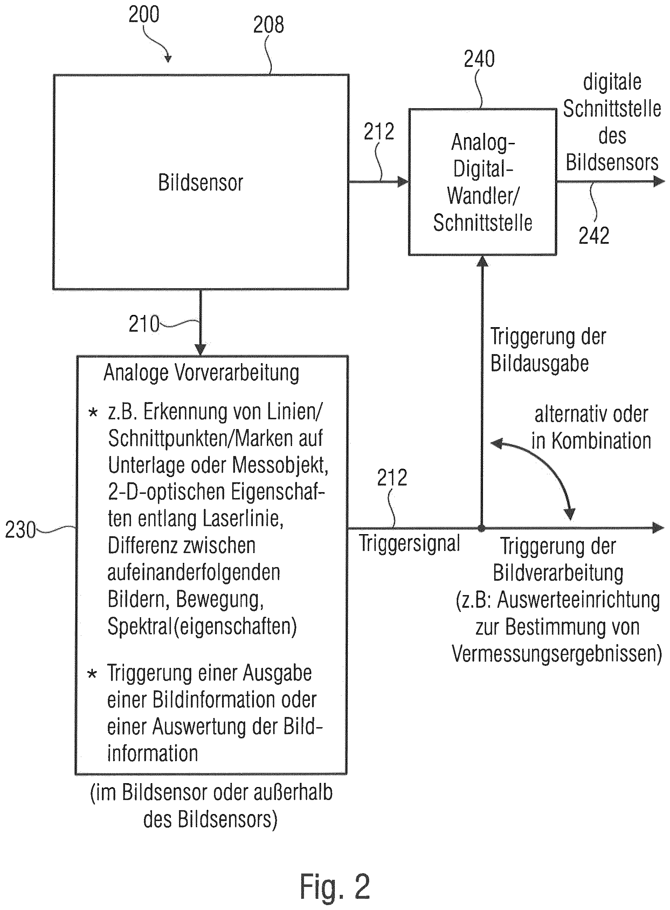

## 2. Vorrichtung zur 3-dimensionalen Vermessung eines Objekts gemäß Fig. 2

Fig. 2 zeigt eine schematische Darstellung einer Vorrichtung zur 3-dimensionalen Vermessung eines Objekts, gemäß einem weiteren Ausführungsbeispiel der vorliegenden Erfindung.

Die Vorrichtung gemäß der Fig. 2 ist in ihrer Gesamtheit mit 200 bezeichnet.

Die Vorrichtung 200 umfasst einen Bildsensor 208, der beispielsweise eine Bildinformation 210 und eine Bildinformation 212 liefern kann. Die Bildinformation 210 kann beispielsweise eine Darstellung einer Bildinformation in Form von analogen Bildsensorsignalen sein. Die Bildinformation 212 kann beispielsweise ebenfalls eine Darstellung in Form von analogen Signalen des Bildsensors sein.

Die Vorrichtung 200 umfasst ferner eine analoge Vorverarbeitung 230, die beispielsweise die Bildinformation 210 in Form von analogen Bildsensorsignalen empfängt. Die analoge Vorverarbeitung 230 kann beispielsweise die Funktion der Auslöseeinrichtung 130 gemäß Fig. 1 übernehmen. Die analoge Vorverarbeitung 230 kann beispielsweise ausgelegt sein, um Linien auf dem Trägerbauteil, das das zu vermessende Objekt trägt, oder auf dem zu vermessenden Objekt selbst, Schnittpunkte zwischen einer projizierten Linie und Linien auf dem Trägerbauteil oder auf dem zu vermessenden Objekt selbst und/oder Marken auf dem Trägerbauteil (Unterlage) oder auf dem zu vermessenden Objekt selbst (Messobjekt) und/oder 2-dimensionale optische Eigenschaften entlang einer projizierten Linie zu erkennen und gegebenenfalls Parameter zu bestimmen und auszugeben, die die erkannten Linien, Schnittpunkte, Marken oder optischen Eigenschaften beschreiben. Alternativ oder zusätzlich kann die analoge Vorverarbeitung ausgelegt sein, um eine Differenz zwischen aufeinanderfolgenden Bildern und/oder eine Bewegung des Objekts oder des Objektträgers zu erkennen und gegebenenfalls durch Parameter zu beschreiben. Die analoge Vorverarbeitung kann beispielsweise unmittelbar durch Hardware erfolgen und somit beispielsweise die analogen Bildsensorsignale ohne eine vorherige Digitalisierung auswerten. Am Ende der Auswertung kann beispielsweise eine Schwellwertentscheidung stehen, die eine Erkennung von Linien, Schnittpunkten, Marken, optischen Eigenschaften oder von Bewegungen signalisiert. Entsprechende Parameter, die die erkannten Linien, Schnittpunkte, Marken, optischen Eigenschaften oder Bewegungen beschreiben können, können dann beispielsweise auf digitalem Wege bestimmt werden, wobei allerdings bevorzugt von einer mehrstufigen Digitalisierung von Bildausschnitten oder von Gesamtbildern abgesehen wird.

Somit kann die analoge Vorverarbeitung 230 basierend auf der Erkennung von Linien, Schnittpunkten, Marken, optischen Eigenschaften, Differenzen zwischen aufeinanderfolgenden Bildern oder Bewegungen eine Auslösung (Triggerung) einer Ausgabe einer Bildinformation oder einer Auswertung der Bildinformation veranlassen. Zu diesem Zweck kann die analoge Vorverarbeitung 230 beispielsweise ein Triggersignal 220 erzeugen, das beispielsweise dem Auslösesignal 120 in der Vorrichtung 100 gemäß Fig. 1 entsprechen kann.

Das Auslösesignal bzw. Triggersignal 220 kann beispielsweise einer Ausgabeeinheit 240 zugeführt werden, die beispielsweise einen Analog-zu-Digital-Wandler und eine digitale Schnittstelle aufweist. Die Ausgabeeinheit 240 an beispielsweise die Bildinformation 212 von dem Bildsensor empfangen (beispielsweise in Form von analogen Bildsensorsignalen) und ansprechend auf das Auslösesignal 220 eine Analog-zu-Digital-Wandlung sowie eine Ausgabe der digitalisierten Bildinformation über die digitale Schnittstelle 242 auslösen.

Alternativ dazu kann das Auslösesignal bzw. Triggersignal 220 auch verwendet werden, um eine Bildverarbeitung (z.B. eine weitere, detailliertere Bildverarbeitung durch eine Auswerteeinrichtung zur Bestimmung von Vermessungsergebnissen) auszulösen. Diese weitere, detailliertere Bildverarbeitung, die beispielsweise eine Information über eine Form eines zu vermessenden Objekts entlang einer projizierten Ebene liefert, kann beispielsweise durch eine separate Auswerteeinrichtung erfolgen, die die Bildinformation über die digitale Schnittstelle 242 empfängt.

Durch eine Trennung der weiteren, detaillierteren Bildverarbeitung, die typischerweise basierend auf digitalisierten Bildinformationen erfolgt, von einer analogen Vorverarbeitung 230, die beispielsweise basierend auf analogen Bitsensorsignalen erfolgt, kann beispielsweise erreicht werden, dass die datenintensive Übertragung der Bildinformation über die Digitalschnittstelle 242 des Bildsensors nur dann erfolgen muss, wenn die sensornahe analoge Vorverarbeitung das Vorliegen einer Auslösebedingung erkennt (und durch das Auslösesignal 220 signalisiert). Da insbesondere die Erkennung der Auslösebedingung typischerweise einfacher ist als die Bestimmung eines Vermessungsergebnisses ist hier auch die Trennung der Auslösung von der Auswerteeinrichtung zur Bestimmung des Vermessungsergebnisses sinnvoll.

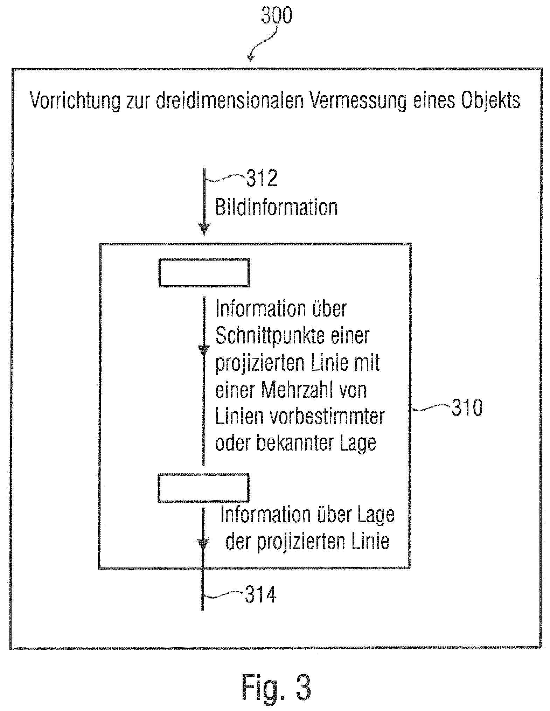

### 3. Vorrichtung zur 3-dimensionalen Vermessung eines Objekts gemäß Fig. 3

Fig. 3 zeigt eine schematische Darstellung einer Vorrichtung zur 3-dimensionalen Vermessung eines Objekts, gemäß einem Ausführungsbeispiel der vorliegenden Erfindung. Die Vorrichtung gemäß Fig. 3 ist in der Gesamtheit mit 300 bezeichnet. Die Vorrichtung zur 3-dimensionalen Vermessung des Objekts umfasst einen Positionsbestimmer 310. Der Positionsbestimmer 310 empfängt eine Bildinformation 312 und liefert basierend auf der Bildinformation 312 eine Information 314 über eine Lage der projizierten Linie. Der Positionsbestimmer 310 ist ausgelegt, um eine Bildinformation, die Schnittpunkte einer projizierten Linie mit einer Mehrzahl von Linien vorbestimmter oder bekannter Lage zeigt, zu empfangen, und um basierend auf der empfangenen Bildinformation eine Lage der projizierten Linie zu bestimmen. Die Lage der projizierten Linie kann beispielsweise durch die Information 314 dargestellt werden.

Der Positionsbestimmer ist somit ausgelegt, um basierend auf einer vergleichsweise einfachen Bildverarbeitung, bei der es im Wesentlichen um die Erkennung von Schnittpunkten der projizierten Linie mit einer Mehrzahl von Linien vor bestimmter oder bekannter Lage geht, Information über die Lage der projizierten Linie, beispielsweise relativ zu den Linien vorbestimmter oder bekannter Lage, bzw. relativ zu einem Ursprung eines Koordinatensystems, in dem die Lage der Mehrzahl von Linien vorbestimmter oder bekannter Lage bekannt ist, zu erhalten. Indem der Positionsbestimmer sich bei seiner Berechnung wesentlich auf die Lage der entsprechenden Schnittpunkte verlässt und diese beispielsweise anhand einer Bildverarbeitung bestimmt, ist es in sehr einfacher Weise möglich, die Lage der projizierten Linie zu bestimmen, ohne dass beispielsweise großer Aufwand bei der Bildverarbeitung betrieben werden müsste.

Die Vorrichtung 300 gemäß Fig. 3 basiert auf der Erkenntnis, dass die Schnittpunkte einer projizierten Linie mit einer Mehrzahl von Linien vorbestimmter oder bekannter Lage mit vergleichsweise geringem Aufwand in einer Bildinformation bestimmt werden können, und dass die Information über die Lage der Schnittpunkte dennoch in vielen Fällen einen eindeutigen und präzisen Rückschluss auf die Lage der projizierten Linie zulässt.

Weitere Details werden im Folgenden noch beschrieben. In anderen Worten, die Vorrichtung 300 gemäß Fig. 3 kann optional durch alle Merkmale und Funktionalitäten ergänzt werden, die hierin beschrieben sind. Es soll darauf hingewiesen werden, dass die hierin beschriebenen weiteren Merkmale und Funktionalitäten einzeln oder in Kombination in die Vorrichtung 300 gemäß der Fig. 3 aufgenommen werden können.

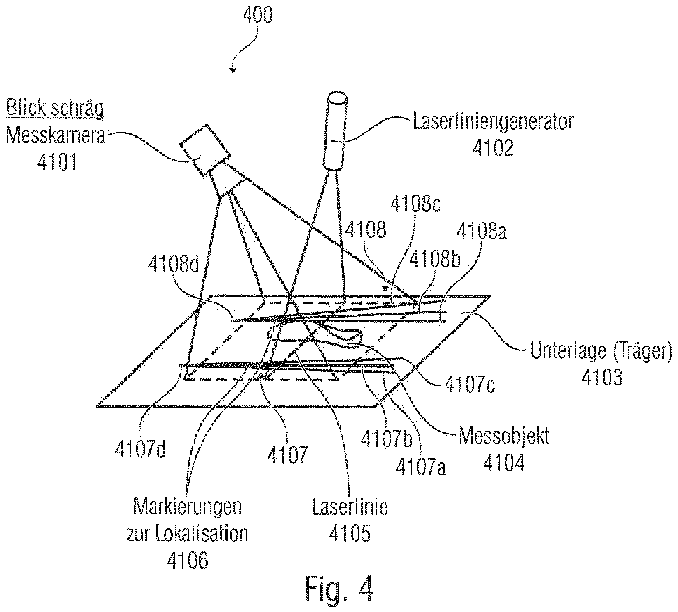

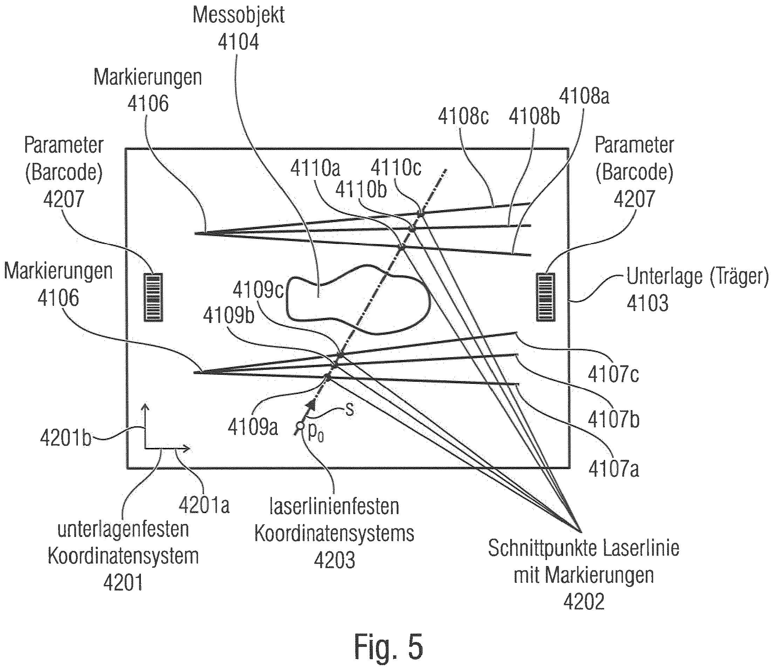

### 4. Vorrichtung gemäß den Fig. 4 und 5

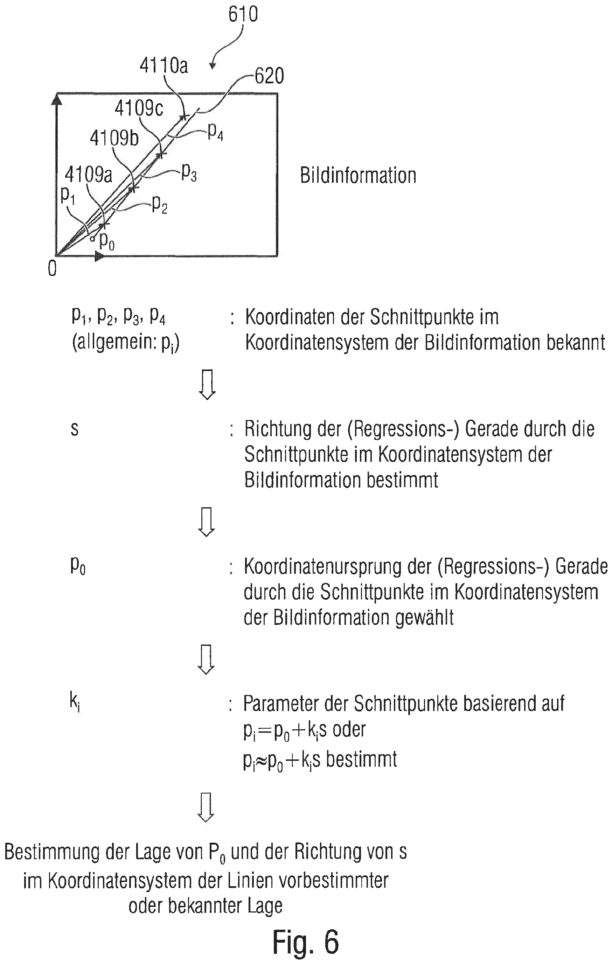

Im Folgenden wird eine Vorrichtung zur 3-dimensionalen Vermessung eines Objekts Bezug nehmend auf die Fig. 4 und 5 näher beschrieben. Ein Ablauf bei einer Bestimmung einer Lage der projizierten Linie wird dann auch noch anhand der Fig. 6 erläutert.

Fig. 4 zeigt, in Form eines Schrägbilds, eine schematische Darstellung einer Vorrichtung zur 3-dimensionalen Vermessung eines Objekts. Die Vorrichtung umfasst eine Messkamera 4101, die beispielsweise angeordnet bzw. ausgerichtet ist, um zumindest einen Teil einer Unterlage 4103, die auch als Träger bzw. Trägerbauteil bezeichnet werden kann, und bevorzugt auch zumindest einen Teil eines Messobjekts (beispielsweise eines zu vermessenden Objekts) aufzunehmen. Die Messkamera 4101 muss allerdings nicht stationär oder fest geführt angeordnet sein, sondern kann beispielsweise auch ausgelegt sein, um im Raum im Wesentlichen frei beweglich zu sein.

Die Vorrichtung 400 umfasst ferner einen Laserliniengenerator 4102, der beispielsweise ausgelegt bzw. angeordnet ist, um eine Laserlinie auf die Unterlage 4103 und bevorzugt auch auf das Messobjekt 4104 zu projizieren. Der Laserliniengenerator 4102 kann beispielsweise angeordnet sein, um einen bestimmten Winkelbereich in einer Ebene mit einem Laserstrahl abzutasten oder periodisch zu überstreichen und so beispielsweise bei ausreichender Wiederholfrequenz in einer Ebene einen vorgehenden Winkelbereich abzudecken. Während die durch den Laserliniengenerator 4102 erzeugten Laserlinien in klarer Luft mangels Streukörpern kaum erkennbar sind, erzeugt der Laserliniengenerator typischerweise eine sichtbare bzw. mit der Messkamera 4101 aufnehmbare "Laserlinie", wenn der Laserstrahl auf Objekte trifft. Die Laserlinie 4105 ist beispielsweise in einem Bereich, in dem der von den Laserliniengenerator 4102 erzeugte Laserstrahl auf die Unterlage 4103 trifft, im Wesentlichen gerade, wenn davon ausgegangen wird, dass die Unterlage 4103 im Wesentlichen eben ist. Sobald die Unterlage 4103 allerdings 3-dimensionale Strukturen aufweist, spiegeln sich diese naturgemäß - abhängig von einem Einfallswinkel des Laserstrahls - in Verformungen der Laserlinie 4105 wider. Dort, wo der Laserstrahl des Laserliniengenerators 4102 auf das zu vermessende Objekt 4104 trifft, folgt die Laserlinie der Kontur des zu vermessenden Objekts 4104 und ist somit bei einem üblichen, 3-dimensionalen und nicht flachen Messobjekt 4104 entsprechend deformiert bzw. gebogen.

Die Unterlage 4103 umfasst ferner eine Mehrzahl von Markierungen 4106 zur Lokalisation, die typischerweise (aber nicht notwendigerweise) durch gerade Linien gebildet werden. Wie in der Fig. 4 ersichtlich ist, gibt es beispielsweise einen ersten Satz 4107 von vorzugsweise geraden Linien, der eine erste Linie 4107a, eine zweite Linie 4107b und eine dritte Linie 4107c umfasst. Die erste Linie 4107a, die zweite Linie 4107b und die dritte Linie 4107c schneiden sich bevorzugt, aber nicht notwendigerweise, in einem ersten Schnittpunkt 4107d. Ferner existiert ein zweiter Satz 4108 von drei Linien 4108a, 4108b, 4108c, die beispielsweise gerade sind, und die beispielsweise durch einen gemeinsamen Punkt 4108d verlaufen. Diesbezüglich sei darauf hingewiesen, dass aber auch eine andere Anzahl an Linien bzw. eine andere Geometrie der Linien möglich ist.

Die Linien 4107a, 4107b, 4107c, 4108a, 4108b, 4108c können beispielsweise fest an der Unterlage 4103 angebracht sein. Die Linien können je nach Ausführungsform auf die Unterlage aufgemalt sein, oder die Linien können auch als 3-dimensionale Konturen auf der Unterlage aufgebracht sein. Bevorzugt sollten die Linien derart gestaltet sein, dass ein Schnittpunkt der Laserlinie 4105 mit den Linien 4107a, 4107b, 4107c, 4108a, 4108b, 4108c durch die Messkamera 4101 klar und deutlich erfasst werden kann. Beispielsweise können die Linien derart ausgeführt sein, dass die Schnittpunkte der Laserlinie 4105 mit den Linien 4107a, 4107b, 4107c, 4108a, 4108b, 4108c als besonders helle oder als besonders dunkle Stellen in einem durch die Messkamera 4101 aufgenommenen Bild erscheinen.

Im Hinblick auf die Lage und Anordnung der Linien sei darauf hingewiesen, dass diese vorzugsweise alle in einer Ebene liegen sollten, die einer Ebene der Unterlage 4103 entspricht. Vorzugsweise sind zumindest vier Linien vorhanden, wobei eine Aufteilung in zwei Sätze von Linien nicht erforderlich ist (aber bei manchen Ausführungsbeispielen zu einer Verbesserung der Genauigkeit beiträgt). Im Übrigen ist es auch nicht erforderlich, dass die Linien, oder eine Teilmenge der Linien, durch einen gemeinsamen Schnittpunkt geht. Allerdings hat sich gezeigt, dass es vorteilhaft ist, wenn nicht alle Linien zueinander parallel sind. Was die Lage der Linien anbelangt, so wird es bevorzugt, dass diese so angeordnet sind, dass ein im Folgenden noch beschriebenes Gleichungssystem eindeutig lösbar ist (wobei eine Überbestimmung des Gleichungssystems typischerweise unkritisch ist, da diese beispielsweise durch Verwendung eines Verfahrens zu einer Minimierung von Fehlerquadraten und somit zu einer Verbesserung der Genauigkeit herangezogen werden kann).

Im Folgenden wird die Anordnung gemäß der Fig. 4 noch einmal in einer Draufsicht erläutert. Fig. 5 zeigt eine solche Draufsicht auf die Anordnung 400, wobei einige weitere Details beschrieben werden. Es ist wiederum ersichtlich, dass die Unterlage 4103 vorhanden ist, die beispielsweise ein zu vermessendes Objekt 4104 trägt. Ebenso ist ersichtlich, dass eine Laserlinie 4105, die durch den Laserliniengenerator 4102 erzeugt wird, entlang der Oberfläche der Unterlage 4103 einen im Wesentlichen geraden Verlauf aufweist. Weiterhin sind die Markierungen 4106 ersichtlich, die beispielsweise sechs Linien 4107a, 4107b, 4107c, 4108a, 4108b, 4108c aufweisen. Weiterhin ist in der Fig. 5 ersichtlich, dass die Laserlinie 4105 sechs Schnittpunkte mit den sechs Linien 4107a-4108c aufweist. Die Schnittpunkte sind mit 4109a, 4109b, 4109c, 4110a, 411 0b, 4110c bezeichnet.

Ferner sei darauf hingewiesen, dass der Unterlage 4103 beispielsweise eine unterlagenfestes Koordinatensystem 4201 zugeordnet sein kann. Das Koordinatensystem muss allerdings nicht explizit auf der Unterlage 4103 gezeigt sein. Das unterlagenfeste Koordinatensystem 4201 weist beispielsweise eine erste Koordinatenrichtung 4201a (z.B. x-Richtung) und eine zweite Koordinatenrichtung 4201b (z.B. y-Richtung) auf.

Im Übrigen sei darauf hingewiesen, dass die Lage der Linien 4107a, 4107b, 4107c, 4108a, 4108b und 4108c in dem unterlagenfesten Koordinatensystem 4201 bekannt sein sollte. Beispielsweise können die Linien durch Parameter $n_i$ und $r_i$ einer vektoriellen Koordinatengleichung $n_i^T x = r_i$ beschrieben werden, wobei zu der Linie dann alle Punkte mit Koordinatenvektor x gehören, die die genannte Koordinatengleichung erfüllen.

Somit ist beispielsweise für jede der Linien 4107a, 4107b, 4107c, 4108a, 4108b, 4108c ein jeweils zugeordneter Normalenvektor $n_i$ und ein jeweils zugeordneter skalarer Parameter $r_i$ bekannt. Die Linienparameter $n_i$, $r_i$ können beispielsweise Systemkonstanten sein. Die Linienparameter können aber auch beispielsweise unterschiedlichen Unterlagen 4103 unterschiedlich zugeordnet sein. Beispielsweise können die Linienparameter $n_i$, $r_i$ durch eine der Unterlage 4103 zugeordnete Informationsdarstellung beschrieben werden. Beispielsweise kann die Unterlage 4103 einen Streifencode (Barcode) 4207 aufweisen, der die Linienparameter $r_i$ und $n_i$ der auf der Unterlage 4103 vorhandenen Linien 4107a, 4107b, 4107c, 4108a, 4108b, 4108c beschreibt. Die Vorrichtung kann beispielsweise ausgelegt sein, um den Streifencode bzw. Barcode auf dem Träger 4103 auszulesen, um davon die Linienparameter $n_i$, $r_i$ abzuleiten.

Ferner sei darauf hingewiesen, dass auch ein laserlinienfestes Koordinatensystem 4203 definiert werden kann, das beispielsweise durch einen Koordinatenursprung $p_0$ und durch einen Richtungsvektor s definiert sein kann. Diesbezüglich sei darauf hingewiesen, dass der Koordinatenursprung $p_0$ und der Richtungsvektor s beispielsweise in dem unterlagenfesten Koordinatensystem 4201 bestimmt werden können. Die Lage des laserlinienfesten Koordinatensystems 4203 im Hinblick auf das unterlagenfesten Koordinatensystem 4201 ist aber typischerweise ursprünglich (vor Auswertung des unten erläuterten Gleichungssystems) unbekannt, so dass $p_0$ und s zunächst als Unbekannte anzusehen sind.

Zusammenfassend ist somit festzuhalten, dass die Fig. 4 einen Aufbau zur Lokalisation einer Laserlinie im Bezug zu einem Messobjekt mittels Markierungen auf der Unterlage (Träger) zeigt.

Die Lokalisation kann anhand von Fig. 4 (auch anhand von Fig. 5) genauer erläutert werden. Die Lokalisation der Laserlinie im Koordinatensystem (z.B. im unterlagenfesten Koordinatensystem 4201) kann dadurch erfolgen, dass das Messobjekt fest mit einem Träger verbunden ist oder auf ihm aufliegt, wobei der Träger und/oder das Messobjekt eine oder mehrere geeignete Markierungen enthalten. Der Träger (und/oder das Messobjekt) wird nun mit einer (beispielsweise von dem Laserliniengenerator 4102 erzeugten) Laserlinie angeleuchtet, die wiederum von einer Messkamera (beispielsweise von der Messkamera 4101) beobachtet wird.

Es erfolgt bevorzugt eine Vorgabe der geometrischen Parameter der Markierungen, beispielsweise manuell oder maschinenlesbar (z.B. mittels Barcode bzw. Streifencode 4207).

In anderen Worten, eine Information über die Lage der (Markierungs-)Linien 4107a, 4107b, 4107c, 4108a, 4108b, 4108c kann manuell in die Vorrichtung (oder den Positionsbestimmer) eingegeben werden, oder die Information über die Lage der (Markierungs-)Linien kann durch die Vorrichtung (oder den Positionsbestimmer) elektronisch eingelesen werden, z.B. durch eine Erkennung der in dem Streifencode (Barcode) enthaltenen Informationen.

Das Konzept umfasst ferner eine Abtastung der Markierungen (z.B. der Markierungslinien). Beispielsweise kann eine Abtastung der Seitenmarkierungen 4106 für eine genaue Lokalisation der LL-Linie (z.B. der Laserlinie 4105) in Relation zu der Unterlage 4103 erfolgen. Ferner erfolgt bevorzugt auch eine Abtastung des dazwischen (z.B. zwischen der ersten Gruppe 4107 von Linien und der zweiten Gruppe 4108 von Linien) befindlichen Messobjekts 4104. Hierbei ist Eindeutigkeit vorteilhaft. Sofern Eindeutigkeit herrscht, besteht die Möglichkeit der Zuordnung von Winkel und Verschiebung der Laserlinie in Bezug auf die Markierungen.

In anderen Worten, die Linien 4107a, 4107b, 4107c, 4108a, 4108b, 4108c sind bevorzugt so angeordnet, dass das Messobjekt 4104 zwischen zumindest zwei der Linien liegt (bzw. liegen kann), bevorzugt ohne irgendeine Linie gegenüber dem Laserliniengenerator 4102 oder gegenüber der Messkamera 4101 abzuschatten. Weiterhin sind die Linien bevorzugt so angeordnet, dass aus den Schnittpunkten 4109a-4109c, 4110a-4110c zwischen der projizierten Linie (Laserlinie) und den Linien 4107a-4107c, 4108a-4108c eindeutig auf die Lage der Laserlinie 4105 relativ zu den Linien 4107a-4107c, 4108a-4108c bzw. relativ zu dem unterlagenfesten Koordinatensystem 4201 geschlossen werden kann. Zu diesem Zweck sind die Linien beispielsweise bevorzugt so zu wählen, dass das im Folgenden beschriebene Gleichungssystem nicht unterbestimmt ist.

Im Folgenden werden Details im Hinblick auf die Bestimmung der Lage der Laserlinie bezogen auf die Unterlage mit den Markierungen beschrieben. Diesbezüglich wird unter andrem auf die Fig. 5 und 6 Bezug genommen.

Fig. 6 zeigt eine schematische Darstellung einer Bildinformation, wie sie beispielsweise von der Messkamera 4101 aufgenommen wird, sowie einer anschließenden Bildverarbeitung durch einen Positionsbestimmer gemäß einem Ausführungsbeispiel der Erfindung.

Die Bildinformation 610, wie sie von der Messkamera 4101 aufgenommen wird, erlaubt beispielsweise die Identifizierung von Schnittpunkten der Laserlinie mit Markierungen auf der Unterlage 4103. Beispielsweise sind ein erster Schnittpunkt 4109a, ein zweiter Schnittpunkt 4109b, ein dritter Schnittpunkt 4109c und ein vierter Schnittpunkt 4110a ersichtlich. Diese Schnittpunkte zwischen der Laserlinie und den Linien 4107a, 4107b, 4107c, 4108a auf der Unterlage 4103 können beispielsweise durch eine einfache Bildverarbeitung (des Positionsbestimmers) erkannt werden, wenn die Schnittpunkte beispielsweise als besonders helle Punkte in der von der Messkamera 4101 gelieferten Bildinformation vorliegen. Alternativ dazu können die Schnittpunkte 4109a, 4109b, 4109c, 4110a beispielsweise auch als besonders dunkle Stellen entlang der Laserlinie oder als besonders breite oder enge Stellen entlang der Laserlinie in der von der Messkamera 4101 gelieferten Bildinformation identifizierbar sein, je nachdem mit welcher Technologie die Linien 4107a, 4107b, 4107c, usw. auf der Unterlage markiert sind. Wichtig ist hier lediglich, dass die Abbilder der Schnittpunkte 4109a, 4109b, 4109c, 4110a in der von der Messkamera gelieferten Bildinformation mit möglichst geringem Aufwand identifizierbar sind.

Somit sind beispielsweise durch eine vergleichsweise einfache Bildauswertung die Koordinaten der Abbilder der Schnittpunkte 4109a, 4109b, 4109c, 4110a in der Bildinformation bestimmbar. Beispielsweise können die Schnittpunkte durch 2-dimensionale Koordinaten beschrieben werden, beispielsweise durch eine x-Koordinate und eine y-Koordinate (beispielsweise in einem Bild-Koordinatensystem).

Somit kann basierend auf der von der Messkamera gelieferten Bildinformation (durch den Positionsbestimmer) eine Regressionsgerade identifiziert werden, die durch die Abbilder der Schnittpunkte 4109a, 4109b, 4109c, 4110a verläuft bzw. die so verläuft, dass eine Summe von Abstandsquadraten der Abbilder der Schnittpunkte 4109a-4110a von der Regressionsgerade minimiert wird. Die Regressionsgerade ist beispielsweise mit 620 bezeichnet. Diesbezüglich sei darauf hingewiesen, dass aber nicht notwendigerweise eine echte Regressionsgerade bestimmt werden muss. Vielmehr kann jedwede Methode zur Identifizierung einer Gerade, die zumindest näherungsweise durch die Abbilder der Schnittpunkte verläuft, herangezogen werden.

Eine Richtung der Regressionsgerade kann beispielsweise durch einen Vektor s beschrieben werden, bei dem es sich beispielsweise um einen Einheitsvektor handelt. Ferner kann in einem Koordinatensystem der Bildinformation ein Koordinatenursprung auf der Regressionsgerade durch die Schnittpunkte gewählt werden. Die Wahl des Koordinatenursprungs ist dabei im Wesentlichen beliebig. Der Koordinatenursprung sollte allerdings auf der Regressionsgeraden 620 liegen. Eine Wahl des Koordinatenursprungs ist mit $p_0$ angedeutet. Basierend auf der Wahl des Koordinatenursprungs $p_0$ (die durch den Positionsbestimmer erfolgen kann) werden nunmehr durch den Positionsbestimmer Parameter $k_i$ ermittelt, die die Lage der Schnittpunkte 4109a, 4109b, 4109c, 4110a (auch durch Vektoren $p_1$, $p_2$, $p_3$, $p_4$ beschrieben) charakterisieren, bzw. die der Lage der Schnittpunkte zugeordnet sind. Beispielsweise können die Parameter $k_i$ im Wesentlichen eine Entfernung der Schnittpunkte von dem (auf der Regressionsgerade gewählten) Koordinatenursprung beschreiben, wobei ein

Vorzeichen der Parameter $k_i$ angeben kann, in welcher Richtung, von dem Koordinatenursprung der Regressionsgerade aus gesehen, der jeweilige Schnittpunkt liegt. Beispielsweise können die Parameter $k_i$ so gewählt werden, dass die Gleichungen $p_i = p_0 + k_i s$ bestmöglich erfüllt sind (z.B. im Sinne eines kleinstmöglichen Fehlers, falls die jeweiligen Schnittpunkte nicht genau auf der (Regressions-) Geraden liegen).

Zusammenfassend ist somit festzuhalten, dass der Positionsbestimmer eine Bildinformation auswertet, und dabei zunächst eine Lage von Schnittpunkten ermittelt. Der Positionsbestimmer ermittelt dann eine Gerade oder Regressionsgerade durch die Schnittpunkte und bestimmt einen Richtungsvektor der Geraden oder Regressionsgeraden. Der Positionsbestimmer wählt dann, beispielsweise willkürlich oder basierend auf einer vorgegebenen Regel, einen Punkt auf der Gerade oder Regressionsgerade als Koordinatenursprung eines "laserlinienfesten Koordinatensystems" 4203. Anschließend bestimmt der Positionsbestimmer die Parameter $k_i$, beispielsweise basierend auf der oben genannten vektoriellen Gleichung.

Anschließend bestimmt der Positionsbestimmer eine Lage von $p_0$ (also des Koordinatenursprungs des laserlinienfesten Koordinatensystems) und eine Richtung s (also eine Richtung des laserlinienfesten Koordinatensystems) in dem Koordinatensystem der Linien vorbestimmter oder bekannter Lage (also in dem unterlagenfesten Koordinatensystem 4201).

Die Bestimmung der Lage von $p_0$ und von s im Koordinatensystem der Linien vorbestimmter oder bekannter Lage wird unten noch anhand eines Gleichungssystems näher erläutert.

Im Folgenden werden weitere Details im Hinblick auf die Bestimmung der Lage der Laserlinie bezogen auf die Unterlage mit den Markierungen erläutert. Die im Folgenden beschriebenen Konzepte können für sich genommen oder in Verbindung mit den weiteren hierin beschriebenen Aspekten eingesetzt werden.

Fig. 5 zeigt diesbezüglich eine Anordnung sowie die Auswertung von Markierungen auf der Unterlage. Ein wichtiger Aspekt der Erfindung (insbesondere der Positionsbestimmung) bezieht sich auf die Bestimmung von Kreuzungspunkten zwischen der Laserlinie (bzw. der projizierten Linie) 4105 und Markierungen 106. Hierzu sei insbesondere auf die Fig. 5 Bezug genommen.

Die Bestimmung von Kreuzungspunkten (auch als Schnittpunkte bezeichnet) ermöglicht eine Ermittlung der Verschiebung und Rotation der Laserlinie 4105 in Bezug auf die Unterlage 4102. Hierdurch wird bei bewegtem Scan die Ausgabe eines Profils (beispielsweise des zu vermessenden Objekts) bei definierter (oder bestimmter) Änderung der Position der Laserlinie ermöglicht. Beispielsweise ist die Ausgabe eines Laserlinienprofils gemeinsam mit Positionsparametern möglich. So können beispielsweise Anfangs- und Endpunkte der Laserlinie im Koordinatensystem der Unterlage (bzw. des Messobjekts) ausgegeben werden, selbst wenn die genaue Lage des Laserliniengenerators 4102 relativ zu der Unterlage 4103 nicht aufgrund einer mechanischen Führung festgelegt oder bestimmbar ist. Somit kann beispielsweise durch den Positionsbestimmer eine Ausgabe von Verschiebung und Rotation der beiden Koordinatensysteme (also des laserlinienfesten Koordinatensystems 4203 und des unterlagenfesten Koordinatensystems 4201) zueinander erfolgen. Beispielsweise kann durch den Positionsbestimmer auch eine Ausgabe der Schnittpunkte zwischen der Laserlinie und den Markierungen zur gemeinsamen Auswertung mit einem Höhenprofil (das durch eine weitergehende Bildauswertung erzielbar ist und das beispielsweise ein Profil des Messobjekts beschreibt) erfolgen.

Im Folgenden werden weitere Details im Hinblick auf den Lokalisationsalgorithmus beschrieben, die beispielsweise für sich genommen oder in Verbindung mit den anhand der Fig. 6 gemachten Ausführungen verwendet werden können.

Die Lage der Laserlinie 4105 wird relativ zu einem unterlagenfesten Koordinatensystem 4201 bestimmt, indem der Koordinatenursprung $p_0$ und ein Einheitsvektor s eines laserlinienfesten Koordinatensystems 4203 berechnet wird. Dazu sind die Markierungen 4106 (beispielsweise die Linien 4107a, 4107b, 4107c, 4108a, 4108b, 4108c) vorzugsweise wenigstens vier auf der Unterlage 4103 aufgebrachte Geraden, die wenigstens vier geeignete Schnittpunkte 4202, 4109a, 4109b, 4109c, 4110a, 4110b, 4110c mit der Laserlinie 4105 auf der Unterlage bilden. Mindestens vier der besagten Schnittpunkte 4202, 4109a, 4109b, 4109c, 4110a, 4110b, 4110c werden entlang der Laserlinie 4105 detektiert (beispielsweise durch den Positionsbestimmer in einem von der Messkamera 4101 gelieferten Abbild) und in dem laserlinienfesten Koordinatensystem 4203 verortet und in der Form $p_i = p_0 + k_i s$ dargestellt ( $i \in \mathbb{N}, \forall i : k_i \in \mathbb{R}$ ). Beispielsweise können zu diesem Zweck als Hilfsgrößen $p_0$ in einem Koordinatensystem der Bildinformation und s in einem Koordinatensystem der Bildinformation bestimmt werden (wobei bevorzugt davon ausgegangen wird, dass die Bildinformation ein im Wesentlichen unverzerrtes Abbild der Unterlage 4103 bzw. der Schnittpunkte zwischen der Laserlinie 4105 und den Markierungen 4202 zeigt). Im Übrigen kann beispielsweise die Parameter $k_i$ durch den Positionsbestimmer ermittelt und für die weitere Berechnung bereitgehalten werden. In dem unterlagenfesten Koordinatensystem 4201 seien die diesen Schnittpunkten zugeordneten Markierungsgeraden 4106 (z.B. Geraden 4107a, 4107b, 4107c, 4108a, 4108b, 4108c) durch eine Gleichung der Form $n_i^T p = r_i$ beschrieben ( $i \in \mathbb{N}$ ), wobei die Konstanten $n_i$ und $r_i$ beispielsweise manuell (in dem Positionsbestimmer oder in die übergeordnete Vorrichtung) eingegeben oder anhand von Parametern oder Streifencodes (Barcodes) 4107 ermittelt werden.

Vorzugsweise werden der Koordinatenursprung $p_0$ und der Einheitsvektor s (beispielsweise in dem unterlagenfesten Koordinatensystem 4201) als Lösung bzw. als Kleinste-Quadrate-Lösung (oder Kleinste-Fehlerquadrate-Lösung) des linearen Gleichungssystems

$$\begin{bmatrix} n_1^T & k_1 n_1^T \\ \vdots & \vdots \\ n_i^T & k_i n_i^T \\ \vdots & \vdots \\ n_N^T & k_N n_N^T \end{bmatrix} \begin{bmatrix} p_0 \\ s \end{bmatrix} = \begin{bmatrix} r_1 \\ \vdots \\ r_i \\ \vdots \\ r_N \end{bmatrix}$$

ermittelt, wobei vorzugsweise N >4 Geraden 4106 und Schnittpunkte 4202 verwendet werden (überbestimmtes Gleichungssystem). Allerdings kann auch eine Verwendung von N=4 Geraden und Schnittpunkten in manchen Ausführungsbeispielen ausreichend sein.

Optional wird das Gleichungssystem nur für eine Teilmenge der Schnittpunkte 4202 der Laserlinie 4105 und der Markierung 4106 gelöst. Optional wird jede Teilmenge so gewählt, dass nur Schnittpunkte 4202 benutzt werden, die nicht durch das Messobjekt 4104 verdeckt sind. Optional wird besagte Teilmenge so gewählt, dass nur Schnittpunkte benutzt werden, die im Bild der Messkamera 4105 sichtbar sind. Optional wird für jeden im Bild der Messkammer 4101 sichtbaren Schnittpunkt eine Detektionsgenauigkeit geschätzt und diese Detektionsgenauigkeit bei der Auswahl besagter Teilmenge berücksichtigt.

Optional werden neben der Kleinste-Quadrate-Lösung des besagten Gleichungssystems auch die Residuen bestimmt. Optional werden diese Residuen benutzt, um Plausibilitätsüberprüfungen durchzuführen. Optional werden die Residuen benutzt, um zu entscheiden, ob ein Bild der Messkamera 4101 verworfen wird (oder nicht).

Gemäß einem Aspekt der Erfindung kann eine Auswertung des Höhenprofils gemeinsam mit den Lokalisationsdaten erfolgen. Beispielsweise kann (z.B. durch den Positionsbestimmer) eine Bestimmung einer exakten Lage der Laserlinie 4105 in Bezug auf die Unterlage bzw. in Bezug auf das Messobjekt erfolgen. Ferner wird somit eine Durchführung einer Koordinatentransformation der Höhendaten (die z.B. basierend auf einem Laser-Lichtschnitt des zu vermessenden Messobjekts 4104 erhalten wird) in das Koordinatensystem der Markierungen bzw. der Unterlage des Messobjekts ermöglicht. Diese Koordinatentransformation kann z.B. durch die Vorrichtung zur Vermessung eines 3-dimensionalen Objekts basierend auf der von dem Positionsbestimmer erhaltenen Information über die Lage der projizierten Linie durchgeführt werden, wobei beispielsweise ein Höhenprofil, das durch eine weitergehende Auswertung der Bildinformation von der Messkamera 4104 erhalten wird, gemäß der Information über die Lage der projizierten Linie einer korrekten Position bzw. einem korrekten Verlauf zugeordnet wird. Gegebenenfalls kann eine Interpolation fehlender Punkte im Rahmen der Auswertung des Höhenprofils gemeinsam mit den Lokalisationsdaten erfolgen. Optional kann ein mehrfaches Überstreichen der Oberfläche mit dem Sensoraufbau zur Abtastung/Abrasterung der Oberfläche sinnvoll sein. Beispielsweise können der Laserliniengenerators 4102 und/oder die Messkamera 4101 mehrfach (z.B. manuell, oder auch durch eine mechanische Führungseinrichtung) an dem zu vermessenden Objekt vorbeigeführt werden, wobei während des Vorbeiführens des Laserliniengenerators 4102 und/oder der Messkamera 4101 zu verschiedenen Zeitpunkten die Position der Laserlinie 4105 bestimmt werden kann. Somit können beispielsweise Höhenprofile, die verschiedenen Lagen der Laserlinie 4105 zugeordnet sind, zu einem Gesamt-Höhenprofil des zu vermessenden Objekts zusammengesetzt werden, wobei durch mehrfaches Vorbeiführen des Laserliniengenerators 4102 und/oder der Messkamera 4101 an dem zu vermessenden Objekt die Anzahl von einzelnen Höhenprofilen erhöht wird, was wiederum zu einer verbesserten Auflösung eines Gesamt-Höhenprofils führen kann.

Zusammenfassend ist somit festzuhalten, dass mit dem anhand der Fig. 4, 5 und 6 beschriebenen Konzept eine verbesserte 3-dimensionale Vermessung eines Objekts möglich wird. So kann durch den hierin beschriebenen Positionsbestimmer eine Bildinformation (z.B. von der Messkamera 4101) verwendet werden, um eine Lage der z.B. durch den Laserliniengenerators 4102 projizierten Linie relativ zu einem unterlagenfesten Koordinatensystem 4201 zu bestimmen, wobei keine mechanischen Positionssensoren mehr nötig sind. Die Bestimmung der Position der Laserlinie 4105 erfolgt vielmehr lediglich aufgrund einer Erkennung von Schnittpunkten zwischen der Laserlinie 4105 und Markierungen 4202 und basiert auf einer Verarbeitung von Informationen, die die Position der Schnittpunkte in einem idealerweise unverzerrten Bild der Unterlage 4103 beschreiben. Bei der Verarbeitung sollte bevorzugt die Lage der Markierungen bzw. Linien 4106, 4107a, 4107b, 4107c, 4108a, 4108b, 4108c bekannt sein, wobei der Positionsbestimmer die Informationen beispielsweise über eine Benutzerschnittstelle oder über eine Auswertung einer optisch oder elektronisch codierten Lageinformation erhalten kann.

Information über die Lage der Laserlinie 4105, die durch den Positionsbestimmer erhalten wird, kann dann in verschiedener Weise verwendet werden. Einerseits kann die Information über die Lage der Laserlinie 4105 beispielsweise verwendet werden, um eine Messausgabe oder eine weitere, detailliertere Auswertung einer Bildinformation (beispielsweise zur Bestimmung eines Höhenprofils entlang eines Laser-Lichtschnitts) auszulösen. Alternativ oder zusätzlich kann die Information über die Lage der Laserlinie 4105 auch verwendet werden, um einem durch eine weitere detailliertere Auswertung der beispielsweise von der Messkamera erhaltenen Bildinformation erhaltenen Höhenprofil eine Positionsinformation zuzuordnen. Ist nämlich beispielsweise die Lage der Laserlinie 4105 in dem unterlagenfesten Koordinatensystem 4201 bekannt, so kann daraus gefolgert werden, wo ein Laser-Lichtschnitt ein zu vermessendes Objekt 4104 schneidet. Somit kann basierend auf der Information über die Lage der Laserlinie 4105 (bzw. allgemein der projizierten Linie) bestimmt werden, wo innerhalb eines Modells des zu vermessenden Objekts 4104 ein durch einen Laser-Lichtschnitt erhaltenes Höhenprofil anzusetzen ist.

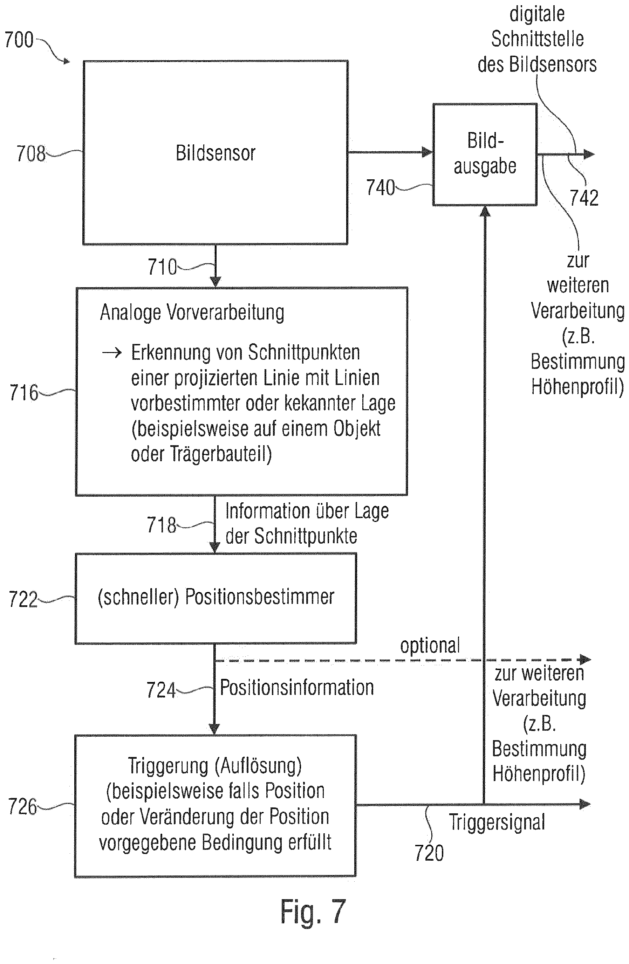

## 5. Vorrichtung gemäß Fig. 7

Fig. 7 zeigt ein Blockschaltbild einer Vorrichtung zur 3-dimensionalen Vermessung eines Objekts, gemäß einem Ausführungsbeispiel der vorliegenden Erfindung. Die Vorrichtung gemäß der Fig. 7 ist in ihrer Gesamtheit mit 700 bezeichnet. Die Vorrichtung 700 umfasst einen Bildsensor 708, der beispielsweise dem oben erläuterten Bildsensor 208 entsprechen kann. Der Bildsensor liefert beispielsweise ein analoges Bildsensorsignal 710, das beispielsweise dem analogen Bildsensorsignal 210 entsprechen kann, und das beispielsweise auch der Bildinformation 312 entsprechen kann. Die Vorrichtung 700 umfasst ferner eine analoge Vorverarbeitung 716, die beispielsweise ausgelegt sein kann, um Schnittpunkte einer projizierten Linie mit Linien vorbestimmter oder bekannter Lage, beispielsweise auf einem Objekt oder einem Trägerbauteil, zu erkennen und eine Information 718 über eine Lage der Schnittpunkte innerhalb der Bildinformation zu liefern. Die Vorrichtung 700 umfasst ferner einen (schnellen) Positionsbestimmer 722, der beispielsweise ausgelegt ist, um basierend auf der Information 718 über die Lage der Schnittpunkte in der Bildinformation eine Positionsinformation 724 zu liefern, die beispielsweise eine Lage der projizierten Linie in Bezug auf ein Trägerbauteil (Unterlage) oder in Bezug auf ein Objekt beschreibt. Die analoge Vorverarbeitung 716 und der (schnelle) Positionsbestimmer 722 können beispielsweise zusammen die Funktion des Positionsbestimmers 310 erfüllen. Die Vorrichtung 700 umfasst ferner eine Triggerung 726, die beispielsweise ausgelegt ist, um ein Triggersignal 720 zu erzeugen, wenn erkannt wird, dass die projizierten Linie eine bestimmte Lage aufweist (wobei die Lage der projizierten Linie durch die Positionsinformation 724 beschrieben wird). Das Triggersignal 720 kann hierbei beispielsweise dem Triggersignal 220 entsprechen.

Insgesamt ist somit festzuhalten, dass die analoge Vorverarbeitung 716, der Positionsbestimmer 722 und die Triggerung 726 zusammen die Funktion der analogen Vorverarbeitung 230 erfüllen kann, also ein Triggersignal 720 erzeugen kann, das eine Messausgabe oder eine weitere, detailliertere Verarbeitung einer Bildinformation auslöst.

Die Vorrichtung 700 umfasst hier beispielsweise noch eine Bildausgabe 740, die beispielsweise dem Analog-Digital-Wandler/Schnittstelle 240 der Vorrichtung 200 entsprechen kann. Beispielsweise kann durch das Auslösesignal bzw. Triggersignal 720 eine Ausgabe einer Bildinformation für eine weitere Verarbeitung, beispielsweise für eine Bestimmung eines Höhenprofils, ausgegeben werden.

Ergänzend sei darauf hingewiesen, dass Details der weiteren Verarbeitung hier nicht gezeigt sind. Die weitere Verarbeitung, die beispielsweise durch das Triggersignal 720 ausgelöst wird, oder die beispielsweise durch die Ausgabe einer Bildinformation über die digitale Schnittstelle 742 ausgelöst wird, kann beispielsweise anhand der über die digitale Schnittstelle 742 gelieferten Bildinformation von dem Bildsensor 708 ein Höhenprofil (z.B. entlang der Laserlinie bzw. entlang des Laser-Lichtschnitts) erzeugen. Beispielsweise kann die weitere Verarbeitung auch eine Lage des Höhenprofils basierend auf der Positionsinformation 724, die optional auch an die weitere Verarbeitung weitergeleitet werden kann, bestimmen.

Somit kann die Vorrichtung 700 in ihrer Gesamtheit eine weitere Verarbeitung (z.B. eine Bestimmung eines Höhenprofils entlang einer Laserlinie oder entlang eines Laser-Lichtschnitts) auslösen, wenn durch eine analoge Vorverarbeitung 716, die beispielsweise auf analogen Bildsensorsignalen basiert, Schnittpunkte einer projizierten Linie mit Linien vorbestimmter oder bekannter Lage erkannt werden, und wenn beispielsweise eine aus diesen Schnittpunkten abgeleitete Positionsinformation 724 anzeigt, dass die projizierten Linie (Laserlinie) sich an einer Position befindet, an der ein Höhenprofil erstellt werden soll.

Die Bestimmung eines Höhenprofils, oder eine sonstige weitere Verarbeitung, die der 3-dimensionalen Vermessung eines Objekts dient, kann beispielsweise durch das Auslösesignal bzw. Trägersignal 720 ausgelöst werden, oder kann beispielsweise einfach durch die Ausgabe einer digitalen Bildinformation über die digitale Schnittstelle 242 des Bildsensors ausgelöst werden (wobei diese Ausgabe einer Bildinformation wiederum über das Auslösesignal 720 ausgelöst wird).

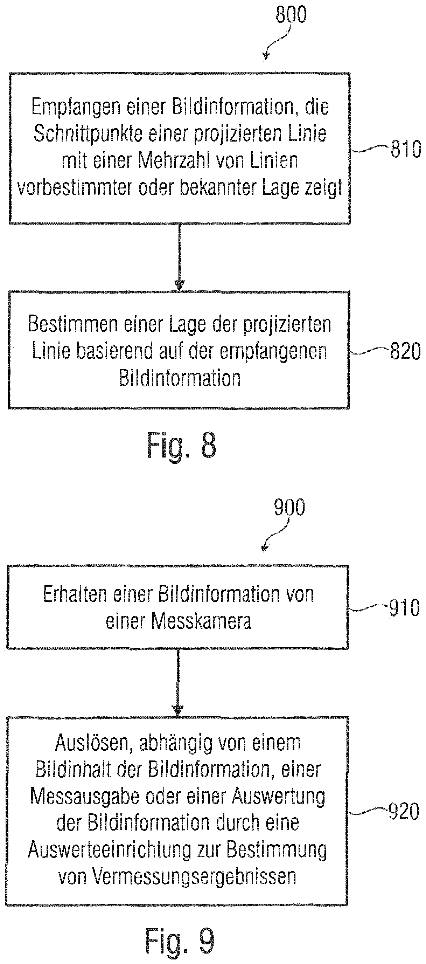

## 6. Verfahren gemäß Fig. 8

Fig. 8 zeigt ein Flussdiagramm eines Verfahrens zur 3-dimensionalen Vermessung eines Objekts. Das Verfahren 800 umfasst ein Empfangen 810 einer Bildinformation, die Schnittpunkte einer projizierten Linie mit einer Mehrzahl von Linien in vorbestimmter und bekannter Lage zeigt, sowie ein Bestimmen 820 einer Lage der projizierten Linie basierend auf der empfangenen Bildinformation.

Das Verfahren 800 kann um alle Schritte, Merkmale und Funktionalitäten ergänzt werden, die hierin beschrieben sind, und zwar einzeln oder in Kombination.

## 7. Verfahren gemäß Fig. 9

Fig. 9 zeigt ein Flussdiagramm eines Verfahrens zur 3-dimensionalen Vermessung eines Objekts. Das Verfahren 900 gemäß Fig. 9 umfasst ein Erhalten 910 einer Bildinformation von einer Messkamera und ein Auslösen 920, abhängig von einem Bildinhalt der Bildinformation, einer Messausgabe oder einer Auswertung der Bildinformation durch eine Auswerteeinrichtung zur Bestimmung von Vermessungsergebnissen.

Das Verfahren 900 gemäß Fig. 9 kann um alle Schritte, Merkmale und Funktionalitäten ergänzt werden, die hierin beschrieben wurden und zwar einzeln oder in Kombination.

## 8. Anwendungen

Im Folgenden werden verschiedene mögliche Anwendungen von Ausführungsbeispielen gemäß der vorliegenden Erfindung beschrieben.

Ausführungsbeispiele gemäß der vorliegenden Erfindung können beispielsweise für eine ungekoppelte oder manuelle Aufnahme von 3-dimensionalen Daten (3D-Daten) bei besonderen Aufbauten verwendet werden. Die Anwendung kann beispielsweise bei unbeweglichen Objekten erfolgen, oder auch bei Objekten, die kein Abscannen mittels Inkrementalgeber (oder keine Bewegung auf einem Trägerbauteil, dessen Bewegung durch Inkrementalgeber erfasst werden kann) ermöglichen. Dies kann beispielsweise ermöglicht werden durch Aufbringen geeigneter Markierungen (z.B. der Markierungen 4202) zur Kennzeichnung der Lage im Koordinatensystem der Unterlage (z.B. im unterlagenfesten Koordinatensystem 4201) bzw. des Messsystems.

Eine Triggerung (z.B. eine Triggerung basierend auf einer Bildinformation) kann beispielsweise verwendet werden zum Abtasten bzw. Abscannen von Objekten im Außenraum.

Ausführungsbeispiele gemäß der Erfindung können auch zur Vermessung von Schienen und Straßen verwendet werden.

Ausführungsbeispiele gemäß der Erfindung können auch zur Erkennung und Vermessung von Fehlstellen oder besonderen Bereichen (z.B. von zu vermessenden Objekten) verwendet werden. Beispielsweise kann eine automatische hochpräzise Vermessung erfolgen, so lange ein Bereich im Bildfeld ist.

Diesbezüglich sei darauf hingewiesen, dass beispielsweise an einer Oberfläche eines zu erfassenden bzw. zu vermessenden Bereichs oder in einer Nachbarschaft eines zu erfassenden oder zu vermessenden Bereichs Markierungen 202 angebracht werden können, die dann beim Scannen des zu erfassenden Bereichs einen Rückschluss auf eine Lage einer projizierten Linie ermöglichen.

Wenn beispielsweise ein bestimmter Bereich einer Mauer (oder eines sonstigen Gebäudeteils) erfasst werden soll, so können beispielsweise in einer Umgebung des zu erfassenden Bereichs entsprechende Markierungen (z.B. Linien oder linienförmige Markierungen) angebracht werden, wobei anhand der Schnittpunkte der projizierten Linie (Laserlinie) mit den Markierungen dann auf die Lage der projizierten Linie (Laserlinie) zurückgeschlossen werden wird. Somit kann ein Laserscanner, der die Laserlinie erzeugt, relativ frei geführt werden, und es kann trotzdem stets ermittelt werden, wo die projizierten Linie im Hinblick auf die zu vermessende Oberfläche verläuft.

Im Übrigen kann die auf einer typischerweise einfachen Bildauswertung basierende Auslösung der Messausgabe oder der weiteren Verarbeitung die Möglichkeit eröffnen, Höhenprofile auch dann zu erstellen, wenn eine exakte relative Führung (beispielsweise mit einer bekannten Relativbewegung zwischen Laserliniengenerator und zu vermessenden Objekt) nicht sichergestellt werden kann oder wenn es unmöglich oder zu aufwendig ist, eine solche Relativbewegung durch mechanische Sensoren zu erfassen. Ausführungsbeispiele gemäß der Erfindung ermöglichen somit eine beliebige Positionierung einer Laserlinie (oder einer projizierten Linie) über einem Messobjekt, was ein freihändiges Scannern erlaubt.

Ausführungsbeispiele gemäß der Erfindung erlauben auch eine Unabhängigkeit von Positionsgebern.

Ausführungsbeispiele gemäß der Erfindung ermöglichen somit eine optimale Auflösung je nach Scanaufgabe (Abtastaufgabe) und Oberfläche/Struktur des Messobjekts.

### 9. Weitere Aspekte

Im Folgenden werden weitere beispielhafte Aspekte der Offenbarung beschrieben, die einzeln oder in Kombination mit den anderen hier dargestellten Aspekten verwendet werden können.

Ausführungsbeispiele gemäß der Erfindung können eine oder mehrere der folgenden Aufgabenstellungen ganz oder teilweise lösen:

- beliebige Positionierung der Laserlinie über Messobjekt - freihändisches Scannen
- Unabhängkeit von Positionsgebern
- Optimale Auflösung je nach Scanaufgabe und Oberfläche/Struktur des Messobjekts

9.1 Lösungsideen (unabhängig voneinander oder kombiniert einsetzbar)

9.1.1 Triggerung

Die erfindungsgemäße Lösung zur Triggerung der Bildaufnahme unterscheidet sich von Stand der Technik dadurch, dass keine elektrische Kopplung zwischen Vortrieb des Messobjekts und Messsystem z.B.

durch Inkrementalgeber oder Timer für ein festes Zeitinvervall besteht. Die Auslösug einer Messausgabe von der Messkamera erfolgt ausschließlich durch den Bildinhalt. Dies bedeutet, dass das Messsystem permanent eine Bildanalyse auf der Grundlage geeigneter Merkmale durchführt und nur bei Erfüllung bestimmter vordefinierter Kriterien eine Bildausgabe erfolgt also von außen betrachtet ein selbstgetriggertes Messergebnis ausgibt.

Dabei können folgende Merkmale zur Detektion einer Aufnahme gewählt werden:

- Laserlichtschnitt

    ◦ 3D Marken auf der Oberfläche der Unterlage, auf der sich das Messobjekt befindet; und/oder

    ◦ 2D optische Eigenschaften entlang der Laserlinie

        ▪ Veränderung der Reflektanz; und/oder

        ▪ Veränderung der Volumenstreuung; und/oder

        ▪ farbliche Aufdrucken; und/oder

    ◦ allgemeine Merkmale aus der Verarbeitungskette innerhalb der Messkamera

        ▪ Zuverlässigkeit der detektierten Linie; und/oder

        ▪ Lokale Breite der Laserlinie; und/oder

- Graubild und Vorschub-Korrelation

    ◦ mit oder ohne flächige Beleuchtung;und/oder

    ◦ optische Merkmale über einen größeren Bereich innerhalb oder außerhalb der beleuchteten Laserlinie; und/oder

    ◦ Ausnutzung der 3D Stereo-Rekonstruktion auch zur Bewegungsschätzung; und/oder

    ◦ Vergleich von Grauwert-Merkmalen in Vorschubrichtung z.B. mittels Korrelation; und/oder

    ◦ Detektion von Marken und farblichen Ausdrücken; und/oder

- Höheninformationen - Risse / Spalten / Kratzer

    o Beschreibung von Rissen und Spalten z.B. durch fehlende Reflexionen mit bestimmter örtlicher Ausdehnung; und/oder

- Aufnahme aus verschiedenen Richtungen

○ Bei Aufnahme mit mehreren Kameras oder mehreren Laserliniengeneratoren aus / in verschiedenen Richtungen

○ Unterschiede in den detektierten Eigenschaften aus verschiedenen Richtungen; und/oder

• Änderung der Polarisation

○ Detektion verschiedener Materialien

○ Erkennung der Variation der Eindringtiefe des Laserstrahls

9.1.2 Merkmalsbestimmung (einige oder alle Konzepte können genutzt werden

• Analyse der in 9.1.1 dargestellten Eigenschaften auf dem Sensor oder der nachgelagerten Verarbeitungseinheit

• Bildverarbeitung mittels Software oder speziell dazu entwickelten HardwareBlöcken

• Sofortige Bestimmung der Ergebnisse ohne oder mit sehr geringer Latenz

• Auswertung zur Entscheidung ob Ergebnisse ausgegeben werden oder die Ausgabe unterdrückt wird

• Auswertung verschiedener Merkmale auf dem Sensorfeld an verschiedenen Regions-of-Interesst

• Nutzung der detektierten Eigenschaften zur Entscheidung der Lage der untersuchten Regions of Interest

• Steuerung der Merkmalsbestimmung durch externe digitale Schnittstelle für synchrone oder asynchrone Parameter anhand derer die Triggerung entschieden wird.

• direkte Ausgabe von Steuersignalen für die Laserliniengeneratoren und Beleuchtungssysteme zur Umtastung der Beleuchtung

9.1.3 Lokalisation

9.1.3.1 Allgemein

Die Lokalisation soll anhand von Figur 4 genauer erläutert werden. Figur 4 zeigt einen Aufbau zur Lokalisation einer Laserlinie in Bezug zu einem Messobjekt mittels Markierungen auf der Unterlage (Träger). Die Lokalisation der Laserlinie im Koordinatensystem kann dadurch erfolgen, dass das Messobjekt fest mit einem Träger verbunden ist oder auf ihm aufliegt, dass eine oder mehrere geeignete Markierungen enthält. Wird es nun mit einer Laserlinie angeleuchtet, die wiederum von einer Messkamera beobachtet wird.

• Vorgabe der geometrischen Parameter der Markierungen

○ manuell; und/oder

○ maschinenlesbar z.B. mittels Barcode (107)

• Abtastung der Markierungen

Seitenmarkierungen 106 für genaue Lokalisation der LL-Linie in Relation zur Unterlage und/oder

○ des sich dazwischen befindlichen Messobjekts

○ Eindeutigkeit ist vorteilhaft - Möglichkeit der Zuordnung von Winkel und Verschiebung der Laserlinie in Bezug auf die Makierungen

9.1.3.2 Bestimmung der Lage der Laserlinie bezogen auf die Unterlage mit den Markierungen

Es wird Bezug genommen auf Fig 5. Fig. 5 zeigt eine Anordnung und Auswertung von Markierungen auf der Unterlage.
Die Bestimmung der Lage der Laserlinie umfasst:

• Bestimmung von Kreuzungspunkten zwischen Laserlinie und Markierungen, siehe Fig. 5

○ Ermittlung der Verschiebung und Rotation der Laserlinie in Bezug auf die Unterlage
○ bei bewegtem Scannen Ausgabe eines Profils bei definierter Änderung der Position der Laserlinie
○ Ausgabe des Laserliniernprofils gemeinsam mit Positionsparametern

▪ z.B. Anfangs und Endpunkte der Laserlinie im Koordinatensystem der Unterlage (des Messobjekts)

▪ Ausgabe von Verschiebung und Rotation der beiden Koordinatensysteme zueinander

▪ Ausgabe der Schnittpunkte zwischen Laserlinie und und Markierungen zur gemeinsamen Auswertung mit dem Höhenprofil

• Lokalisationsalgorithmus
Die Lage der Laserlinie (105) wird relativ zu einem unterlagenfesten Koordinatensystem (201) bestimmt, indem der Koordinatenursprung $p_0$ und ein Einheitsvektor s eines laserlinienfesten Koordinatensystems (203) berechnet wird: Dazu sind die Markierungen (106) vorzugsweise wenigstens vier auf der Unterlage (103) aufgebrachte Geraden, die wenigstens vier geeignete Schnittpunkte (202) mit der Laserlinie (105) auf der Unterlage bilden. Mindestens vier der besagten Schnittpunkte (202) werden entlang der Laserlinie (105) detektiert und in dem laserlinienfesten Koordinatensystem (203) verortet und in der Form $p_i = p_0 + k_i s$ dargestellt ( $i \in \mathbb{N}$ , $\forall i : k_i \in \mathbb{R}$ ). In dem unterlagenfesten Koordinatensystem (201) seien die diesen Schnittpunkten zugeordneten Markierungsgeraden (106) durch eine Gleichung der Form $n_i^T p = r_i$ beschrieben ( $i \in \mathbb{N}$ ), wobei die Konstanten $n_i$ und $r_i$ manuell eingegeben oder anhand der Parameter/Barcodes (107) ermittelt werden. Vorzugsweise werden der Koordinatenursprung $p_0$ und der Einheitsvektor s als Lösung bzw. als Kleinste-Quadrate-Lösung des linearen Gleichungssystems

$$\begin{bmatrix} n_1^T & k_1 n_1^T \\ \vdots & \vdots \\ n_i^T & k_i n_i^T \\ \vdots & \vdots \\ n_N^T & k_N n_N^T \end{bmatrix} \begin{bmatrix} p_0 \\ s \end{bmatrix} = \begin{bmatrix} r_1 \\ \vdots \\ r_i \\ \vdots \\ r_N \end{bmatrix}$$

ermittelt, wobei vorzugsweise $N > 4$ Geraden (106) und Schnittpunkte (202) verwendet werden (Überbestimmtes Gleichungssystem).

Optional wird das Gleichungssystem nur für eine Teilmenge der Schnittpunkte (202) der Laserlinie (105) und der Markierungen (106) gelöst. Optional wird diese Teilmenge so gewählt, dass nur Schnittpunkte (202) benutzt werden, die nicht durch das Messobjekt (104) verdeckt sind. Optional wird besagte Teilmenge so gewählt, dass nur Schnittpunkte benutzt werden, die im Bild der Messkamera (101) sichtbar sind. Optional wird für jeden im Bild der Messkamera (101) sichtbaren Schnittpunkt eine Detektionsgenauigkeit geschätzt und diese Detektionsgenauigkeit bei der Auswahl von besagter Teilmenge berücksichtigt.

Optional werden neben der kleinste-Quadrate-Lösung des besagten Gleichungssystems auch die Residuen bestimmt. Optional werden diese Residuen benutzt, um Plausibilitätsüberprüfungen durchzuführen. Optional werden die Residuen benutzt, um zu entscheiden ob ein Bild der Messkamera (101) verworfen wird.

• Auswertung des Höhenprofils gemeinsam mit dem Lokalisationsdaten

○ Bestimmung der exakten Lage der Laserlinie in Bezug auf die Unterlage bzw. das Messobjekt

○ Durchführung einer Koordinatentransformation der Höhendaten in das Koordinatensystem der Markierungen bzw. der Unterlage und des Messobjektes

○ gegebenenfalls Interpolation fehlender Punkte

○ Mehrfaches Überstreichen der Oberfläche mit dem Sensoraufbau zur Abtastung/Abrasterung der Oberfläche

9.1.4 Anwendungen (als Alternativen oder kombinierbar)

• Ungekoppelte oder manuelle Aufnahme von 3D-Daten bei besonderen Aufbauten

○ unbeweglichen Objekten

○ Objekten, die kein Abscannen mittels Inkrementalgeber ermöglichen

▪ Aufbringen geeigneter Markierungen zur Kennzeichnung der Lage im Koordinatensystem der Unterlage bzw. des Messsystems

• Triggerung: Abscannen von Objekten im Außenraum

• Vermessung von Schienen oder Straßen

• Erkennung und Vermessung von Fehlstellen oder besonderen Bereichen

○ automatische hochpräzise Vermessung, so lange Bereich im Bildfeld

10. Implementierungsalternativen

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magneti-schen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponente der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (100; 200; 700) zur dreidimensionalen Vermessung eines Objekts, mit folgenden Merkmalen:

    eine Auswerteeinrichtung zur Bestimmung von Vermessungsergebnissen in Form eines Höhenprofils,
    einer Auslöseeinrichtung (130;230;716,722,726), die ausgelegt ist, um eine Bildinformation (110) von einer Messkamera (4101) zu erhalten und um abhängig von einem Bildinhalt der Bildinformation (110;210;710) eine Weiterleitung der Bildinformation an die Auswerteeinrichtung zur Auswertung der Bildinformation durch die Auswerteeinrichtung zur Bestimmung von Vermessungsergebnissen auszulösen;
    wobei die Auslöseeinrichtung (130;230;716,722,726) ausgelegt ist, um zu erkennen, wenn der Bildinhalt sich gegenüber einem Referenz-Bildinhalt um zumindest eine vorgegebene Verschiebung oder um mehr als eine vorgegebene Verschiebung verschoben hat, und um abhängig von der Erkennung einer Verschiebung die Weiterleitung der Bildinformation zur Auswertung der Bildinformation durch die Auswerteeinrichtung auszulösen, wobei
    die Auslöseeinrichtung ausgelegt ist, um einen Vergleich von einem oder mehreren aktuellen Bildsensor-Analogsignalen (210;710) mit einem oder mehreren in einem Analogspeicher gespeicherten Referenz-Bildsensor-Analogsignalen durchzuführen, um eine zeitliche Veränderung einer Bildinformation zu erkennen, wobei der analoge Vergleich einer Bildung von Differenzbildern entspricht und eine Erkennung einer Bewegung des Bildinhalts ermöglicht, und um basierend darauf die Ausgabe einer digitalisierten Version der Bildinformation über eine digitale Schnittstelle (242;742) eines Bildsensors der Messkamera auszulösen, wobei die Auslöseeinrichtung ausgelegt ist, um verschiedene Merkmale in verschiedenen Bereichen des Bildinhalts zu analysieren, wobei bei einer Auswertung von Merkmalen in verschiedenen Bereichen des Bildinhalts sachlich unterschiedliche Bildinhalte gleichsam betrachtet werden, wobei die Auslöseeinrichtung ausgelegt ist, zu entscheiden, in welchen Bildinhalten relevante Merkmale vorliegen, um die Ausgabe einer digitalisierten Version der Bildinformation auszulösen.

2. Vorrichtung gemäß Anspruch 1, wobei die Auslöseeinrichtung ausgelegt ist, um abhängig von der Erkennung der Verschiebung die Weiterleitung der Bildinformation zur Auswertung der Bildinformation durch die Auswerteeinrichtung zur Bestimmung von Vermessungsergebnissen auszulösen, um Vermessungsergebnisse in einem bestimmten räumlichen Abstand zu erzeugen oder um Vermessungsergebnisse in gleichmäßigen räumlichen Abständen zu erzielen.

3. Vorrichtung gemäß Anspruch 1 oder Anspruch 2, wobei die Auslöseeinrichtung (130;230;716,722,726) ausgelegt ist, um eine Bildanalyse durchzuführen und um die Messausgabe oder die Auslösung der Auswertung der Bildinformation abhängig von der Bildanalyse auszulösen.

4. Vorrichtung gemäß einem der Ansprüche 1 bis 3, wobei die Auslöseeinrichtung (130;230;716,722,726) ausgelegt ist, um eine analoge Vorverarbeitung von Bildsensor-Analogsignalen (710) vorzunehmen, und um basierend auf der analogen Vorverarbeitung der Bildsensor-Analogsignale die Weiterleitung der Bildinformation (212) zur Auswertung der Bildinformation durch eine Auswerteeinrichtung zur Bestimmung von Vermessungsergebnissen auszulösen.

5. Vorrichtung gemäß einem der Ansprüche 1 bis 3, wobei die Auslöseeinrichtung (130;230;716,722,726) ausgelegt ist, um eine Digitalisierung (240;740) von Bildsensor-Analogsignalen über die digitale Schnittstelle (242;742) des Bildsensors auszulösen.

6. Vorrichtung gemäß einem der Ansprüche 1 bis 5, wobei die Auslöseeinrichtung (130;230;716,722,726) ausgelegt ist, um eine kombinierende analoge Verarbeitung einer Mehrzahl von Bildsensor-Analogsignalen vorzunehmen, und um basierend auf einem Ergebnis der kombinierenden analogen Verarbeitung die Ausgabe einer digitalisierten Version der Bildinformation über eine digitale Schnittstelle (242;742) des Bildsensors auszulösen.

7. Vorrichtung gemäß einem der Ansprüche 1 bis 6, wobei die Auslöseeinrichtung (130;230;716,722,726) ausgelegt ist, um eine Information über eine Zuverlässigkeit einer Linienerkennung oder eine Information über eine Breite einer Linie zu erhalten und um abhängig davon die Weiterleitung der Bildinformation zur Auswertung der Bildinformation durch die Auswerteeinrichtung zur Bestimmung von Vermessungsergebnissen auszulösen.

8. Vorrichtung gemäß einem der Ansprüche 1 bis 7, wobei die Auslöseeinrichtung (130;230;716,722,726) ausgelegt ist, um basierend auf dem Bildinhalt eine Bewegung einer Kamera (4101), die die Bildinformation erzeugt, und/oder eine Verschiebung einer Lichtquelle (4102), die das Messobjekt bestrahlt, und/oder eine Bewegung des Messobjekts, zu bestimmen oder abzuschätzen, und um so eine Relativbewegung zwischen der Lichtquelle und/oder der Kamera und dem zu vermessenden Objekt zu ermitteln, und wobei die Auslöseeinrichtung ausgelegt ist, um abhängig von der Bestimmung oder Abschätzung der Verschiebung die Weiterleitung der Bildinformation zur Auswertung der Bildinformation durch die Auswerteeinrichtung zur Bestimmung von Vermessungsergebnissen auszulösen, um bei Vorliegen einer gewünschten Verschiebung im Bezug auf eine vorherige Bestimmung eines Vermessungsergebnisses eine erneute Bestimmung eines Vermessungsergebnisses auszulösen, um eine Bestimmung von Vermessungsergebnissen mit einem bestimmten räumlichen Abstand zu erzielen.

9. Vorrichtung gemäß einem der Ansprüche 1 bis 8, wobei die Auslöseeinrichtung (130;230;716,722,726) ausgelegt ist, um bei der Analyse des Bildinhalts eine 3-dimensionale Rekonstruktion zur Bewegungsschätzung auszunutzen, und/oder einen Vergleich von Grauwert-Merkmalen in einer Vorschubrichtung durchzuführen, und/oder Marken zu detektieren, und/oder farbliche Ausdrücke zu detektieren, und/oder

wobei die Auslöseeinrichtung (130;230;716,722,726) ausgelegt ist, um bei der Analyse des Bildinhalts Höheninformationen oder Oberflächeninformationen auszuwerten, und/oder
wobei die Auslöseeinrichtung (130;230;716,722,726) ausgelegt ist, um Bildinformationen, die aus mehreren verschiedenen Richtungen aufgenommen werden, zu berücksichtigen, und/oder
wobei die Auslöseeinrichtung (130;230;716,722,726) ausgelegt ist, um eine oder mehrere Polarisationseigenschaften oder eine Änderung einer oder mehrerer Polarisationseigenschaften, zu bestimmen und in Abhängigkeit davon die Weiterleitung der Bildinformation zur Auswertung der Bildinformation durch die Auswerteeinrichtung zur Bestimmung von Vermessungsergebnissen auszulösen.

10. Vorrichtung gemäß einem der Ansprüche 1 bis 9, wobei die Auslöseeinrichtung (130;230;716,722,726) ausgelegt ist, um basierend auf dem Bildinhalt der Bildinformation zu erkennen, ob eine interessierende Region des Messobjekts vermessbar ist oder nicht, und um abhängig davon die Weiterleitung der Bildinformation zur Auswertung der Bildinformation durch die Auswerteeinrichtung zur Bestimmung von Vermessungsergebnissen auszulösen.

11. Vorrichtung gemäß einem der Ansprüche 1 bis 10, wobei die Vorrichtung ausgelegt ist, um ein Messobjekt dreidimensional abzutasten, ohne dass eine Kamera (4101) zur Erzeugung der Bildinformation und/oder eine Lichtquelle (4102) zur Bestrahlung des Messobjekts fest geführt ist, oder wobei die Kamera zur Erzeugung der Bildinformation und/ oder die Lichtquelle zur Bestrahlung des Messobjekts für eine manuelle Führung ausgelegt ist.

12. Verfahren (900) zur dreidimensionalen Vermessung eines Objekts, mit folgenden Schritten:

Erhalten (910) einer Bildinformation von einer Messkamera; und
Auslösen (920), abhängig von einem Bildinhalt der Bildinformation, einer Weiterleitung der Bildinformation an eine Auswerteeinrichtung zur Auswertung der Bildinformation durch die Auswerteeinrichtung zur Bestimmung von Vermessungsergebnissen in Form eines Höhenprofils; wobei ein Vergleich von einem oder mehreren aktuellen Bildsensor-Analogsignalen (210;710) mit einem oder mehreren in einem Analogspeicher gespeicherten Referenz-Bildsensor-Analogsignalen durchgeführt wird, um eine zeitliche Veränderung einer Bildinformation zu erkennen, wobei der analoge Vergleich einer Bildung von Differenzbildern entspricht und eine Erkennung einer Bewegung des Bildinhalts ermöglicht, und wobei basierend darauf die Ausgabe einer digitalisierten Version der Bildinformation über eine digitale Schnittstelle (242;742) eines Bildsensors der Messkamera ausgelöst wird; wobei das Verfahren ferner umfasst

Auswerten von verschiedenen Merkmalen in verschiedenen Bereichen des Bildinhalts, wobei sachlich unterschiedliche Bildinhalte gleichsam betrachtet werden, Entscheiden, in welchen Bildinhalten relevante Merkmale vorliegen, Erkennen, wenn der Bildinhalt sich gegenüber einem Referenz-Bildinhalt um zumindest eine vorgegebene Verschiebung oder um mehr als eine vorgegebene Verschiebung verschoben hat, und Auslösen der Weiterleitung der Bildinformation zur Auswertung der Bildinformation durch die Auswerteeinrichtung zur Bestimmung von Vermessungsergebnissen abhängig von der Erkennung einer Verschiebung, wobei die Ausgabe einer digitalisierten Version der Bildinformation ausgelöst wird.

13. Verfahren (900) zur dreidimensionalen Vermessung eines Objekts nach Anspruch 12, wobei unter Verwendung eines Laserlichtschnitts oder eines anderen Lichtschnitts dreidimensionale Marken (4106, 4107a, 4107b, 4107c, 4108a, 4108b, 4108c) auf einer Oberfläche oder zweidimensionale optische Eigenschaften entlang einer Laserlinie (4105) als Merkmale erkannt werden, und wobei abhängig von erkannten Merkmalen die Weiterleitung der Bildinformation zur Auswertung der Bildinformation durch die Auswerteeinrichtung zur Bestimmung von Vermessungsergebnissen ausgelöst wird.

14. Computerprogramm mit einem Programmcode zur Durchführung des Verfahrens gemäß Anspruch 12 oder 13, wobei der Programcode dahin gehend wirksam ist, ein Verfahren nach Anspruche 12 oder 13 durchzuführen, wenn das Computerprogramm auf einem Computer abläuft.

15. System umfassend:

eine Lichtquelle, die ein Objekt bestrahlt; eine Messkamera, um zumindest einen Teil des Objekts aufzunehmen und damit Bildinformationen (110) zu erfassen; wobei das System ausgelegt ist, um eine Abtastung des Objekts mit einem Lichtschnitt durchzuführen, wobei das System eine Vorrichtung (100; 200; 700) zur dreidimensionalen Vermessung des Objekts nach einem der Ansprüche 1 bis 11 aufweist.

**Claims**

1. An apparatus (100; 200; 700) for three-dimensional measurement of an object, comprising:

evaluation means for determining measuring results in the form of a height profile; trigger means (130; 230; 716, 722, 726) configured to obtain image information (110) from a measurement camera (4101) and to trigger, in dependence on image content of the image information (110; 210; 710), forwarding of the image information to the evaluation means for evaluation of the image information by the evaluation means for determining measurement results; wherein the trigger means (130; 230; 716, 722, 726) is configured to detect when the image content has shifted with respect to a reference image content by at least a predetermined shift or by more than a predetermined shift and to trigger, in dependence on the detection of a shift, forwarding of the image information for the evaluation of the image information by the evaluation means, wherein

the trigger means is configured to perform a comparison of one or more current image sensor analog signals (210; 710) to one or more reference image sensor analog signals stored in an analog storage to detect a temporal change of image information, wherein the analog comparison corresponds to forming difference images and allows detection of a movement of the image content, and to trigger the output of a digitized version of the image information via a digital interface (242; 742) of an image sensor of the measurement camera based thereon, wherein the trigger means is configured to analyze different features in different areas of the image content, wherein, when evaluating features in different areas of the image content, objectively different image contents are considered at the same time, wherein the trigger means is configured to decide in which image contents there are relevant features to trigger output of a digitized version of the image information.

2. The apparatus according to claim 1, wherein the trigger means is configured to trigger, in dependence on the detection of the shift, forwarding of the image information for the evaluation of the image information by the evaluation means for determining measurement results, in order to generate measurement results at a specific spatial distance or to obtain measurement results at equal spatial distances.

3. The apparatus according to claim 1 or claim 2, wherein the trigger means (130; 230; 716, 722, 726) is configured to perform image analysis and to trigger the measurement output or triggering of the evaluation of the image information in dependence on the image analysis.

4. The apparatus according to one of claims 1 to 3, wherein the trigger means (130; 230; 716, 722, 726) is configured to perform analog preprocessing of image sensor analog signals (710) and to trigger, based on the analog preprocessing of the image sensor analog signals, forwarding of the image information (212) for the evaluation of the image information by an evaluation means for determining measurement results.

5. The apparatus according to one of claims 1 to 3, wherein the trigger means (130; 230; 716, 722, 726) is configured to trigger digitization (240; 740) of image sensor analog signals via the digital interface (242; 742) of the image sensor.

6. The apparatus according to one of claims 1 to 5, wherein the trigger means (130; 230; 716, 722, 726) is configured to perform combining analog processing of a plurality of image sensor analog signals to trigger the output of a digitized version of the image information via a digital interface (242; 742) of the image sensor based on a result of the combining analog processing.

7. The apparatus according to one of claims 1 to 6, wherein the trigger means (130; 230; 716, 722, 726) is configured to obtain information on a reliability of a line detection or information on a width of a line and to trigger, in dependence thereon, forwarding of the image information for the evaluation of the image information by the evaluation means for determining measurement results.

8. The apparatus according to one of claims 1 to 7, wherein the trigger means (130; 230; 716, 722, 726) is configured to determine or estimate, based on the image content, a movement of a camera (4101) generating the image information and/or a shift of a light source (4102) irradiating the measurement object and/or a movement of the measurement object, and in that way to determine a relative movement between the light source and/or the camera and the object to be measured, and wherein the trigger means is configured to trigger, in dependence on the determination or estimation of the shift, forwarding of the image information or the evaluation of the image information by the evaluation means for determining measurement results in order to trigger, when there is a desired shift relative to a previous determination of a measurement result, another determination of a measurement result to obtain a determination of measurement results with a specific spatial distance.

9. The apparatus according to one of claims 1 to 8, wherein the trigger means (130; 230; 716, 722, 726) is configured to use, during the analysis of the image content, three-dimensional reconstruction for motion estimation and/or to perform a comparison of gray value features in an advance direction and/or to detect marks and/or to detect color terms, and/or

    wherein the trigger means (130; 230; 716, 722, 726) is configured to evaluate height information or surface information during the analysis of the image content, and/or
    wherein the trigger means (130; 230; 716, 722, 726) is configured to consider image information captured from several different directions, and/or
    wherein the trigger means (130; 230; 716, 722, 726) is configured to determine one or several polarization characteristics or a change of one or several polarization characteristics and to trigger, in dependence thereon, forwarding of the image information for the evaluation of the image information by the evaluation means for determining measurement results.

10. The apparatus according to one of claims 1 to 9, wherein the trigger means (130; 230; 716, 722, 726) is configured to detect, based on the image content of the image information, whether a region of interest of the measurement object can be measured or not and to trigger, in dependence thereon, forwarding of the image information for the evaluation of the image information by the evaluation means for determining measurement results.

11. The apparatus according to one of claims 1 to 10, wherein the apparatus is configured to scan a measurement object three-dimensionally, without a camera (4101) for generating the image information and/or a light source (4102) for irradiating the measurement object being guided in a fixed manner, or wherein the camera for generating the image information and/or the light source for irradiating the measurement object is configured for manual guidance.

12. A method (900) for three-dimensional measurement of an object, comprising:

    receiving (910) image information from a measurement camera; and
    triggering (920), in dependence on image content of the image information, forwarding the image information to an evaluation means for evaluation of the image information by the evaluation means for determining measurement results in the form of a height profile;
    wherein a comparison of one or more current image sensor analog signals (210; 710) to one or more reference image sensor analog signals stored in an analog storage is performed to detect a temporal change of image information, wherein the analog comparison corresponds to forming difference images and allows detection of a movement of the image content, and wherein the output of a digitized version of the image information via a digital interface (242; 742) of an image sensor of the measurement camera is triggered based thereon,
wherein the method further comprises:

    evaluating different features in different areas of the image content, wherein objectively different image contents are considered at the same time,
    deciding in which image contents there are relevant features,
    detecting when the image content has shifted with respect to a reference image content by at least a predetermined shift or by more than a predetermined shift, and
    triggering forwarding of the image information for the evaluation of the image information by the evaluation means for determining measurement results in dependence on the detection of a shift, wherein output of a digitalized version of the image information is triggered.

13. The method (900) for three-dimensional measurement of an object according to claim 12, wherein, by using a laser light section or a different light section, three-dimensional marks (4106, 4107a, 4107b, 4107c, 4108a, 4108b, 4108c) on a surface or two-dimensional optical characteristics along a laser line (4105) area detected as features, and wherein forwarding of the image information for the evaluation of the image information by the evaluation means for determining measurement results is triggered in dependence on detected features.

14. A computer program having program code for performing the method according to claim 12 or 13, wherein the program code is operative to perform a method according to claim 12 or 13 when the computer program runs on a computer.

15. A system comprising:

    a light source irradiating an object;
    a measurement camera to capture at least part of the object and thus detect image information (110);
    wherein the system is configured to perform a scan of the object with a light section,
    wherein the system comprises an apparatus (100; 200; 700) for three-dimensional measurement of the object according to one of claims 1 to 11.

## Revendications

1. Dispositif (100; 200; 700) pour mesurer un objet en trois dimensions, aux caractéristiques suivantes:

    un moyen d'évaluation destiné à déterminer les résultats de mesure sous forme d'un profil de hauteur,
    un moyen de déclenchement (130; 230; 716, 722, 726) qui est conçu pour obtenir une information d'image (110) d'une caméra de mesure (4101) et pour déclencher, en fonction d'un contenu d'image de l'information d'image (110; 210; 710), une transmission de l'information d'image au moyen d'évaluation pour l'évaluation de l'information d'image par le moyen d'évaluation pour déterminer les résultats de mesure;
    dans lequel le moyen de déclenchement (130; 230; 716, 722, 726) est conçu pour reconnaître quand le contenu de l'image s'est décalé par rapport à un contenu d'image de référence d'au moins un décalage prédéterminé ou de plus d'un décalage prédéterminé, et pour déclencher, en fonction de la reconnaissance d'un décalage, la transmission de l'information d'image pour l'évaluation de l'information d'image par le moyen d'évaluation, dans lequel
    le moyen de déclenchement est conçu pour effectuer une comparaison d'un ou plusieurs signaux analogiques de capteur d'image actuels (210; 710) avec un ou plusieurs signaux analogiques de capteur d'image de référence mémorisés dans une mémoire analogique pour reconnaître une modification dans le temps d'une information d'image, dans lequel la comparaison analogique correspond à une formation d'images de différence et permet une reconnaissance d'un mouvement du contenu d'image, et pour déclencher, sur base de cette dernière, la sortie d'une version numérisée de l'information d'image à travers une interface numérique (242; 742) d'un capteur d'image de la caméra de mesure, dans lequel le moyen de déclenchement est conçu pour analyser différentes caractéristiques dans différentes zones du contenu d'image, dans lequel, lors d'une évaluation des caractéristiques dans différentes zones du contenu d'image, sont en quelque sorte considérés des contenus d'image objectivement différents, dans lequel le moyen de déclenchement est conçu pour décider les contenus d'image dans lesquels sont présentes des caractéristiques pertinentes, pour déclencher la sortie d'une version numérisée de l'information d'image.

2. Dispositif selon la revendication 1, dans lequel le moyen de déclenchement est conçu pour déclencher, en fonction de la reconnaissance du déplacement, la transmission de l'information d'image pour l'évaluation de l'information d'image par le moyen d'évaluation pour déterminer les résultats de mesure, pour générer les résultats de mesure avec une certaine distance spatiale entre eux ou pour obtenir les résultats de mesure avec des distances spatiales uniformes entre eux.

**3.** Dispositif selon la revendication 1 ou 2, dans lequel le moyen de déclenchement (130; 230; 716, 722, 726) est conçu pour effectuer une analyse d'image et pour déclencher, en fonction de l'analyse d'image, la sortie de mesure ou le déclenchement de l'évaluation de l'information d'image.

**4.** Dispositif selon l'une des revendications 1 à 3, dans lequel le moyen de déclenchement (130; 230; 716, 722, 726) est conçu pour procéder à un prétraitement analogique des signaux analogiques du capteur d'image (710), et pour déclencher, sur base du prétraitement analogique des signaux analogiques du capteur d'image, la transmission de l'information d'image (212) pour l'évaluation de l'information d'image par un moyen d'évaluation pour déterminer les résultats de mesure.

**5.** Dispositif selon l'une des revendications 1 à 3, dans lequel le moyen de déclenchement (130; 230; 716, 722, 726) est conçu pour déclencher une numérisation (240; 740) des signaux analogiques de capteur d'image via l'interface numérique (242; 742) du capteur d'image.

**6.** Dispositif selon l'une des revendications 1 à 5, dans lequel le moyen de déclenchement (130; 230; 716, 722, 726) est conçu pour procéder à un traitement analogique de combinaison d'une pluralité de signaux analogiques de capteur d'image, et pour déclencher, sur base d'un résultat du traitement analogique de combinaison, la sortie d'une version numérisée de l'information d'image à travers une interface numérique (242; 742) du capteur d'image.

**7.** Dispositif selon l'une des revendications 1 à 6, dans lequel le moyen de déclenchement (130; 230; 716, 722, 726) est conçu pour obtenir une information sur une fiabilité d'une reconnaissance de ligne ou une information sur une largeur d'une ligne et pour déclencher, en fonction de cette dernière, la transmission de l'information d'image pour l'évaluation de l'information d'image par le moyen d'évaluation pour déterminer les résultats de mesure.

**8.** Dispositif selon l'une des revendications 1 à 7, dans lequel le moyen de déclenchement (130; 230; 716, 722, 726) est conçu pour déterminer ou pour estimer, sur base du contenu d'image, un mouvement d'une caméra (4101) qui génère l'information d'image, et/ou un déplacement d'une source de lumière (4102) qui irradie l'objet de mesure, et/ou un mouvement de l'objet de mesure, et pour déterminer ainsi un mouvement relatif entre la source de lumière et/ou le la caméra et l'objet à mesurer, et dans lequel le moyen de déclenchement est conçu pour déclencher, en fonction de la détermination ou de l'estimation du déplacement, la transmission de l'information d'image pour l'évaluation de l'information d'image par le moyen d'évaluation pour déterminer les résultats de mesure, pour déclencher, en cas de présence d'un déplacement souhaité par rapport à une détermination précédente d'un résultat de mesure, une nouvelle détermination d'un résultat de mesure pour obtenir une détermination de résultats de mesure avec une distance spatiale déterminée entre eux.

**9.** Dispositif selon l'une des revendications 1 à 8, dans lequel le moyen de déclenchement (130; 230; 716, 722, 726) est conçu pour faire usage, lors de l'analyse du contenu de l'image, d'une reconstruction tridimensionnelle pour l'estimation de mouvement, et/ou pour effectuer une comparaison de caractéristiques de valeurs de gris dans une direction d'avance, et/ou pour détecter des marques, et/ou pour détecter des expressions de couleur, et/ou

dans lequel le moyen de déclenchement (130; 230; 716, 722, 726) est conçu pour évaluer, lors de l'analyse du contenu d'image, les informations de hauteur ou les informations de surface, et/ou
dans lequel le moyen de déclenchement (130; 230; 716, 722, 726) est conçu pour tenir compte des informations d'image qui sont enregistrées à partir de plusieurs directions différentes, et/ou
dans lequel le moyen de déclenchement (130; 230; 716, 722, 726) est conçu pour déterminer une ou plusieurs propriétés de polarisation ou une modification d'une ou plusieurs propriétés de polarisation et pour déclencher, en fonction de cela, la transmission de l'information d'image pour l'évaluation de l'information d'image par le moyen d'évaluation pour déterminer les résultats de mesure.

**10.** Dispositif selon l'une des revendications 1 à 9, dans lequel le moyen de déclenchement (130; 230; 716, 722, 726) est conçu pour reconnaître, sur base du contenu d'image de l'information d'image, si une région d'intérêt de l'objet de mesure peut être mesurée ou non, et pour déclencher, en fonction de cela, la transmission de l'information d'image pour l'évaluation de l'information d'image par le moyen d'évaluation pour déterminer les résultats de mesure.

**11.** Dispositif selon l'une des revendications 1 à 10, dans lequel le dispositif est conçu pour balayer un objet à mesurer en trois dimensions, sans qu'une caméra (4101) pour générer l'information d'image et/ou une source de lumière (4102) pour irradier l'objet de mesure ne soit guidée, ou dans lequel la caméra pour générer l'information d'image et/ou la source de lumière pour irradier l'objet de mesure est conçue pour un guidage manuel.

**12.** Procédé (900) pour mesurer un objet en trois dimensions, aux étapes suivantes consistant à:

obtenir (910) une information d'image à partir d'une caméra de mesure; et

déclencher (920), en fonction d'un contenu d'image de l'information d'image, une transmission de l'information d'image à un moyen d'évaluation pour l'évaluation de l'information d'image par le moyen d'évaluation pour déterminer les résultats de mesure sous forme d'un profil de hauteur;

dans lequel est effectuée une comparaison d'un ou plusieurs signaux analogiques de capteur d'image actuels (210; 710) avec un ou plusieurs signaux analogiques de capteur d'image de référence mémorisés dans une mémoire analogique pour reconnaître un changement dans le temps d'une information d'image, dans lequel la comparaison analogique correspond à une formation d'images de différence et permet une reconnaissance d'un mouvement du contenu d'image, et dans lequel est déclenchée, sur base de cela, la sortie d'une version numérisée de l'information d'image à travers une interface numérique (242; 742) d'un capteur d'image de la caméra de mesure;

dans lequel le procédé comporte par ailleurs le fait de

évaluer différentes caractéristiques dans différentes zones du contenu d'image, où sont en quelque sorte considérés des contenus d'image objectivement différents,

décider les contenus d'image dans lesquels sont présentes des caractéristiques pertinentes,

reconnaître quand le contenu d'image a été décalé par rapport à un contenu d'image de référence d'au moins un décalage prédéterminé ou de plus d'un décalage prédéterminé, et

déclencher la transmission de l'information d'image pour l'évaluation de l'information d'image par le moyen d'évaluation pour déterminer les résultats de mesure en fonction de la reconnaissance d'un déplacement, où est déclenchée la sortie d'une version numérisée de l'information d'image.

**13.** Procédé (900) pour mesurer un objet en trois dimensions selon la revendication 12, dans lequel sont reconnues comme des caractéristiques, à l'aide d'une découpe à la lumière laser ou d'une autre découpe à la lumière, des marques tridimensionnelles (4106, 4107a, 4107b, 4107c, 4108a, 4108b, 4108c) sur une surface ou des propriétés optiques bidimensionnelles le long d'une ligne laser (4105), et dans lequel est déclenchée par le moyen d'évaluation, en fonction de caractéristiques reconnues, la transmission de l'information d'image pour l'évaluation de l'information d'image pour déterminer les résultats de mesure.

**14.** Programme d'ordinateur avec un code de programme pour mettre en oeuvre le procédé selon la revendication 12 ou 13, dans lequel le code de programme est efficace pour réaliser un procédé selon la revendication 12 ou 13 quand le programme d'ordinateur est exécuté sur un ordinateur.

**15.** Système comprenant:

une source de lumière qui irradie un objet;

une caméra de mesure destinée à enregistrer au moins une partie de l'objet et à capturer ainsi les informations d'image (110);

dans lequel le système est conçu pour effectuer un balayage de l'objet par une coupe à la lumière,

dans lequel le système présente un dispositif (100; 200; 700) pour la mesure en trois dimensions de l'objet selon l'une des revendications 1 à 11.

100

Vorrichtung zur dreidimensionalen Vermessung eines Objekts

110 Bildinformation
von einer Messkamera

Auslöseeinrichtung ~130

Auslösung (z.B. Auslösesignal) einer
120 Messausgabe oder einer Auswertung
der Bildinformation durch eine Auswerteeinrichtung zur Bestimmung von
Vermessungsergebnissen

Fig. 1

200   208

Bildsensor

212

240

Analog-
Digital-
Wandler/
Schnittstelle

digitale
Schnittstelle
des
Bildsensors

242

Triggerung der
Bildausgabe

210

Analoge Vorverarbeitung

* z.B. Erkennung von Linien/
Schnittpunkten/Marken auf
Unterlage oder Messobjekt,
2-D-optischen Eigenschaften entlang Laserlinie,
Differenz zwischen
aufeinanderfolgenden
Bildern, Bewegung,
Spektral(eigenschaften)

* Triggerung einer Ausgabe
einer Bildinformation oder
einer Auswertung der Bildinformation

230

212

Triggersignal

alternativ oder
in Kombination

Triggerung der
Bildverarbeitung
(z.B: Auswerteeinrichtung
zur Bestimmung von
Vermessungsergebnissen)

(im Bildsensor oder außerhalb
des Bildsensors)

Fig. 2

300

Vorrichtung zur dreidimensionalen Vermessung eines Objekts

312
Bildinformation

Information über
Schnittpunkte einer
projizierten Linie mit
einer Mehrzahl von
Linien vorbestimmter
oder bekannter Lage

310

Information über Lage
der projizierten Linie

314

Fig. 3

400

Blick schräg
Messkamera
4101

Laserliniengenerator
4102

4108c
4108
4108a
4108b
4108d

Unterlage (Träger)
4103

4107c

4107d
4107
4107b
4107a

Messobjekt
4104

Markierungen
zur Lokalisation
4106

Laserlinie
4105

Fig. 4

EP 3 433 574 B1

Fig. 5

| $p_1, p_2, p_3, p_4$ (allgemein: $p_i$) | : Koordinaten der Schnittpunkte im Koordinatensystem der Bildinformation bekannt |
|---|---|

$$\Downarrow$$

| s | : Richtung der (Regressions-) Gerade durch die Schnittpunkte im Koordinatensystem der Bildinformation bestimmt |
|---|---|

$$\Downarrow$$

| $p_0$ | : Koordinatenursprung der (Regressions-) Gerade durch die Schnittpunkte im Koordinatensystem der Bildinformation gewählt |
|---|---|

$$\Downarrow$$

| $k_i$ | : Parameter der Schnittpunkte basierend auf $p_i = p_0 + k_i s$ oder $p_i \approx p_0 + k_i s$ bestimmt |
|---|---|

$$\Downarrow$$

Bestimmung der Lage von $P_0$ und der Richtung von s
im Koordinatensystem der Linien vorbestimmter
oder bekannter Lage

## Fig. 6

digitale
Schnittstelle
des Bildsensors

700

708

Bildsensor

Bildausgabe

740

742

zur
weiteren
Verarbeitung
(z.B.
Bestimmung
Höhenprofil)

710

Analoge Vorverarbeitung

716 → Erkennung von Schnittpunkten
einer projizierten Linie mit Linien
vorbestimmter oder kekannter Lage
(beispielsweise auf einem Objekt
oder Trägerbauteil)

718 Information über Lage
der Schnittpunkte

722 (schneller) Positionsbestimmer

optional

724 Positionsinformation

zur weiteren
Verarbeitung
(z.B.
Bestimmung
Höhenprofil)

726 Triggerung (Auflösung)
(beispielsweise falls Position
oder Veränderung der Position
vorgegebene Bedingung erfüllt

Triggersignal

720

Fig. 7

800

Empfangen einer Bildinformation, die
Schnittpunkte einer projizierten Linie
mit einer Mehrzahl von Linien
vorbestimmter oder bekannter Lage zeigt — 810

Bestimmen einer Lage der projizierten
Linie basierend auf der empfangenen
Bildinformation — 820

## Fig. 8

900

Erhalten einer Bildinformation von
einer Messkamera — 910

Auslösen, abhängig von einem
Bildinhalt der Bildinformation, einer
Messausgabe oder einer Auswertung
der Bildinformation durch eine
Auswerteeinrichtung zur Bestimmung
von Vermessungsergebnissen — 920

## Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140285658 A1
- EP 0228500 A2
- US 20080204763 A1
- EP 3163252 A1
- US 2014240464 A1